# EUROPEAN PATENT APPLICATION

(11) **EP 4 503 287 A1**
(43) Date of publication of application: **05.02.2025**
(21) Application number: 22935364.4
(22) Date of filing: 30.03.2022
(51) Int. Cl.: H01M 50/264

(54) **BATTERY PACK**

(71) Applicant: Vehicle Energy Japan Inc., Ibaraki 312-8505 (JP)
(72) Inventor: NAKAMOTO, Masayuki, Hitachinaka-shi, Ibaraki 312-8505 (JP); NAKAJIMA, Takayuki, Hitachinaka-shi, Ibaraki 312-8505 (JP)
(74) Representative: MERH-IP Matias Erny Reichl Hoffmann Patentanwälte PartG mbB
(86) International application number: PCT/JP2022/016367
(87) International publication number: WO 2023/188219

(57) **Abstract**

A battery pack 1 includes: a plurality of stacked batteries 100; a spacer (a cell spacer 202, a first intermediate spacer 203, and a second intermediate spacer 204) which is provided between the batteries 100 adjacent to each other along the stacking direction X of the battery 100 and holds the adjacent batteries 100; and a holding member (a first side plate 231 and a second side plate 232) which holds the plurality of batteries 100 along the stacking direction X. For example, the cell spacer 202 includes a convex portion 202a projecting from the battery 100 toward, for example, the second side plate 232. For example, the second side plate 232 includes an accommodating portion 232d having a recessed depression to accommodate the convex portion 202a.

## Description

### Technical Field

The present invention relates to a battery pack.

### Background Art

Conventionally, a battery pack (power supply device) provided with a spacer (separator) and a holding member (fastening member) has been known (see, for example, Patent Literature 1).

### Citation List

### Patent Literature

Patent Literature 1: JP 2020-113361 A

### Summary of Invention

### Technical Problem

In battery packs, it is required to maintain assemblability even when one constituent member having a convex portion projecting toward another constituent member is included.

### Solution to Problem

A battery pack of the present invention includes: a plurality of stacked batteries; a spacer which is provided between the batteries adjacent to each other along a stacking direction of the battery and holds the adjacent batteries; and a holding member holding the plurality of batteries along the stacking direction. The spacer includes a convex portion projecting from the battery toward the holding member. The holding member includes an accommodating portion having a recessed depression to accommodate the convex portion.

### Advantageous Effects of Invention

According to the battery pack of the present invention, assemblability can be maintained even when one constituent member having a convex portion projecting toward another constituent member is included.

### Brief Description of Drawings

Fig. 1 is a perspective view illustrating a battery pack 1 of an embodiment.
Fig. 2 is a perspective view illustrating the battery pack 1 of Fig. 1 in a different orientation along a horizontal direction.
Fig. 3 is a perspective view illustrating the battery pack 1 of Fig. 1 from below.
Fig. 4 is a top view illustrating the battery pack 1 of Fig. 1 in a state where there is no bus bar holder 321.
Fig. 5 is a top view illustrating constituent members of a region F5 of Fig. 4.
Fig. 6 is a top view illustrating a partial cross section of constituent members of a region F6 of Fig. 5.
Fig. 7 is a perspective view illustrating a partial cross section of constituent members of a region F7 of Fig. 4.
Fig. 8 is a perspective view illustrating a state where some of constituent members of the battery pack 1 of Fig. 7 are exploded in a height direction Z.
Fig. 9 is a side view illustrating constituent members in a cross section taken along line 9-9 of Fig. 7.
Fig. 10 is a perspective view illustrating a case 721 and an insert nut 722 of a junction unit 700.
Fig. 11 is a top view illustrating a third accommodating portion 721f of the case 721 and a negative-electrode-side connection terminal 709.
Fig. 12 is a top view illustrating a third accommodating portion 731f of a case 731 according to a first modification of the case 721 and the negative-electrode-side connection terminal 709.
Fig. 13 is a top view illustrating a third accommodating portion 741f of a case 741 according to a second modification of the case 721 and the negative-electrode-side connection terminal 709.
Fig. 14 is a perspective view illustrating a state where batteries 100, a cell spacer 202, and a second side plate 232 are exploded in a stacking direction X.
Fig. 15 is a side view illustrating constituent members of Fig. 14.
Fig. 16 is a perspective view illustrating the battery pack 1 of Fig. 4 in a state where some of constituent members of the junction unit 700 are exploded in a width direction Y.
Fig. 17 is a perspective view illustrating the batteries 100 and a holding unit 200 of the battery pack 1 in a state where some of constituent members of the holding unit 200 are exploded in the width direction Y.
Fig. 18 is a perspective view illustrating a state where a first side plate 231 and the second side plate 232 are removed from Fig. 17 and constituent members of the batteries 100 and the holding unit 200 are exploded in the stacking direction X.
Fig. 19 is a perspective view illustrating the battery pack 1 of Fig. 4 in a state where some of the constituent members of a controller unit 400 are exploded in the width direction Y.
Fig. 20 is a perspective view illustrating a part of a temperature measurement unit 600 and a part of the junction unit 700.
Fig. 21 is a perspective view illustrating a voltage detection unit 500.
Fig. 22 is a schematic view illustrating a layout of the battery pack 1.
Fig. 23 is a schematic view illustrating a layout of a battery pack 2 according to a first modification of the battery pack 1.
Fig. 24 is a schematic view illustrating a layout of a battery pack 3 according to a second modification of the battery pack 1.

### Description of Embodiments

Embodiments for carrying out the present invention will be described with reference to the drawings. In order to facilitate understanding of the respective embodiments, sizes and ratios of constituent members are sometimes exaggerated in the respective drawings. In the respective drawings, the same configuration is denoted by the same reference sign. In the respective drawings, a stacking direction X, a width direction Y, and a height direction Z of a battery pack 1 are indicated by arrows. In the respective drawings, however, the stacking direction X, the width direction Y, and the height direction Z of the battery pack 1 indicate a relative positional relationship in the same drawing. That is, the stacking direction X, the width direction Y, and the height direction Z of the battery pack 1 change in a case where the battery pack 1 is rotated by 180 degrees and arranged with an upper surface and a lower surface being inverted, and in a case where the battery pack 1 is rotated by 90 degrees and arranged with the upper surface being a side surface. In the respective drawings, a screw thread of an outer peripheral surface of a fastening bolt and a groove of an inner peripheral surface of an insert nut are not illustrated.

### (Configuration of Battery Pack 1 of Embodiment)

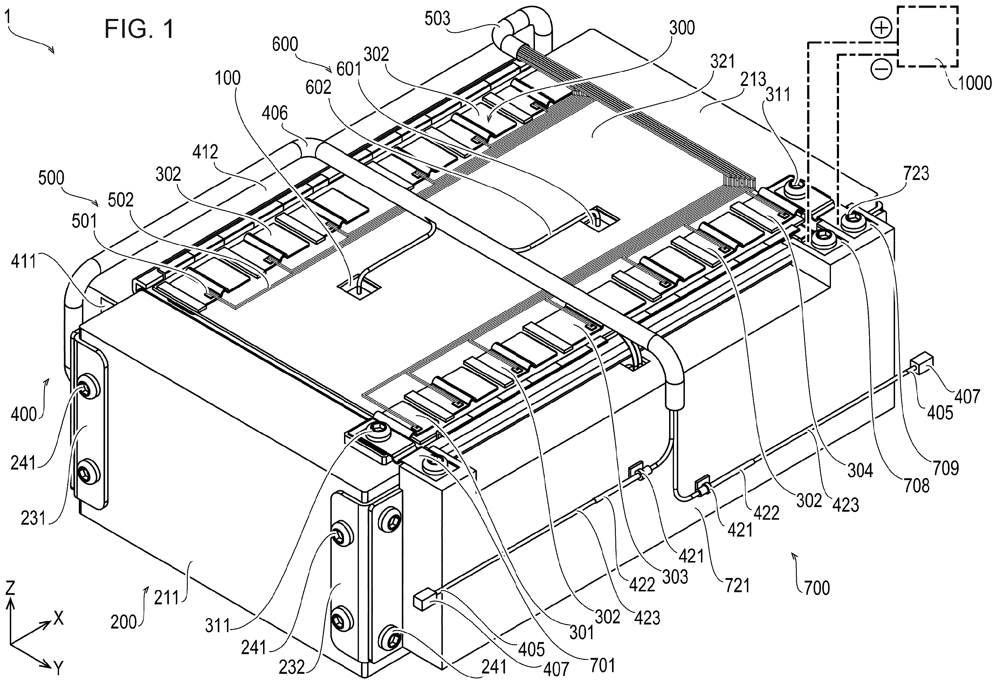

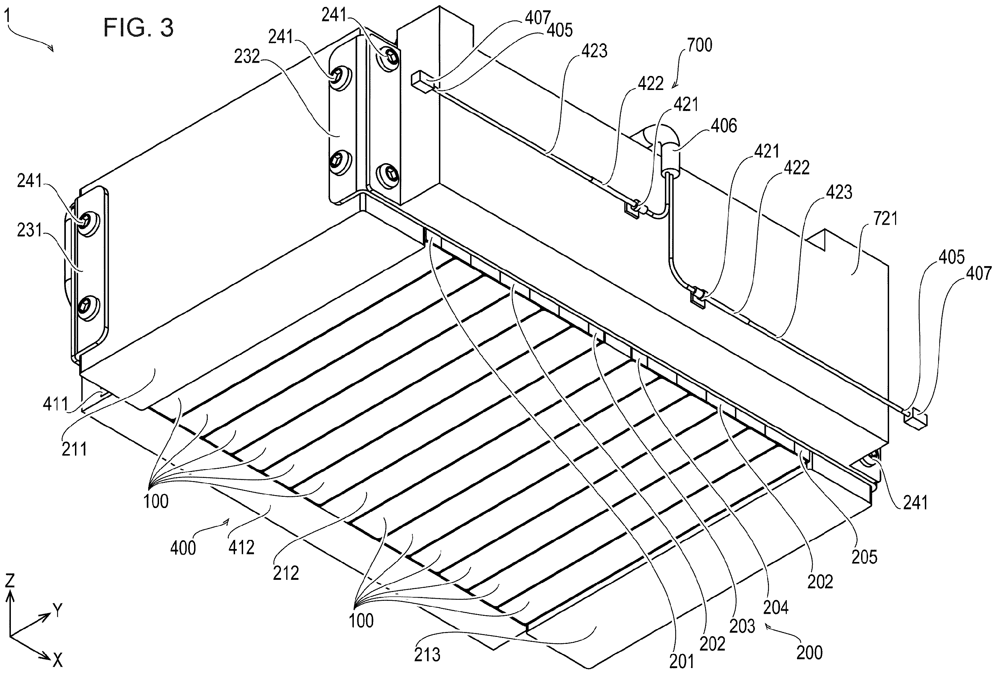

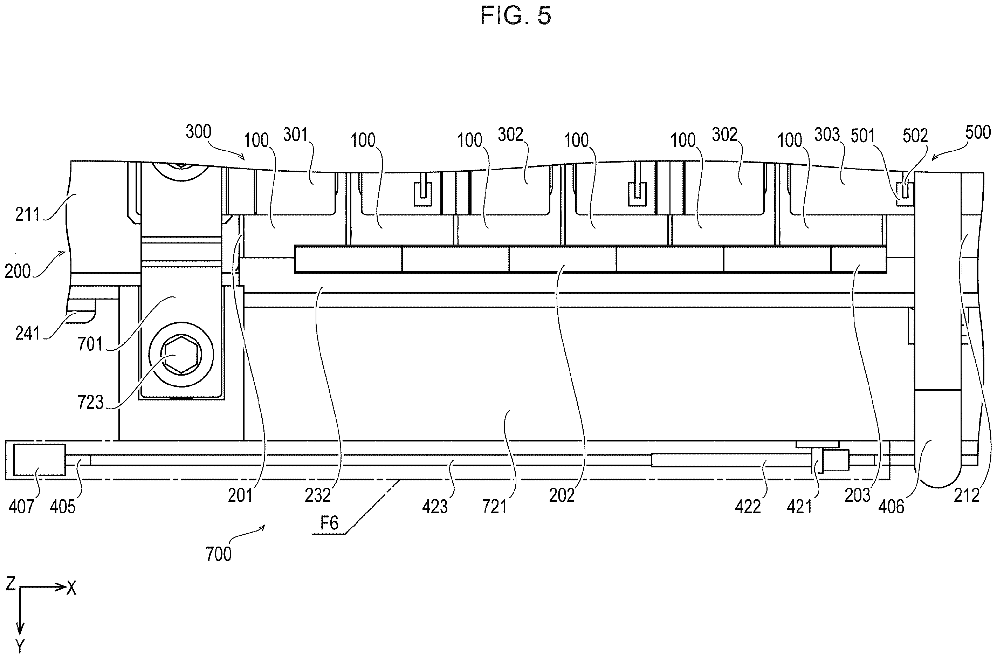

A configuration of a battery pack 1 of an embodiment will be described with reference to Figs. 1 to 24.

The battery pack 1 is configured as, for example, a power source for operating an electric device 1000 mounted on a vehicle. Alternatively, the battery pack 1 may be configured as, for example, a power source for operating a motor for causing a vehicle to travel.

The battery pack 1 includes a plurality of batteries 100, a holding unit 200 that holds the plurality of batteries 100, a bus bar unit 300 that electrically connects the plurality of batteries 100, and a controller unit 400 that controls input and output of power of the plurality of batteries 100. In addition, the battery pack 1 includes, as units controlled by the controller unit 400, a voltage detection unit 500 that detects a voltage of the battery 100, a temperature measurement unit 600 that measures a temperature of the battery 100, and a junction unit 700 that electrically connects the electric device 1000, for example, on the vehicle side and the plurality of batteries 100. Constituent members of the battery pack 1 may be included in any unit among the holding unit 200 to the junction unit 700 without being limited.

### (Configuration of Battery 100)

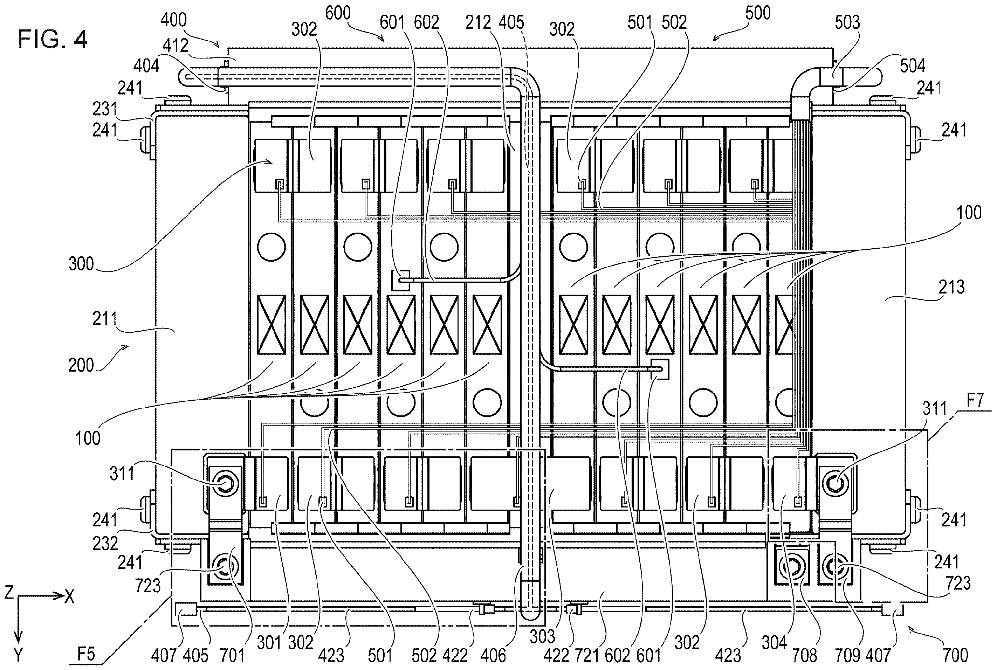

As illustrated in Fig. 4, the batteries 100 are stacked in the stacking direction X via the holding unit 200. For example, twelve batteries 100 are stacked. The battery 100 is configured using, for example, a lithium ion battery. The battery 100 illustrated in Figs. 1 to 5, 7, 8, and 14 to 19 includes a current collector, a container 101, a lid 102, a positive electrode terminal 103 (an electrode terminal), and a negative electrode terminal 104 (an electrode terminal). Hereinafter, constituent members included in the battery 100 will be described.

The current collector of the battery 100 is configured by winding or stacking a positive electrode and a negative electrode with an insulating member (separator) interposed therebetween. That is, the current collector corresponds to a charger/discharger where power is charged or discharged. The current collector is accommodated in the container 101. The container 101 is filled with an electrolytic solution. The lid 102 is joined to an opening of the container 101 to seal the current collector. The positive electrode terminal 103 and the negative electrode terminal 104 relay the input and output of power between the current collector and the electric device 1000.

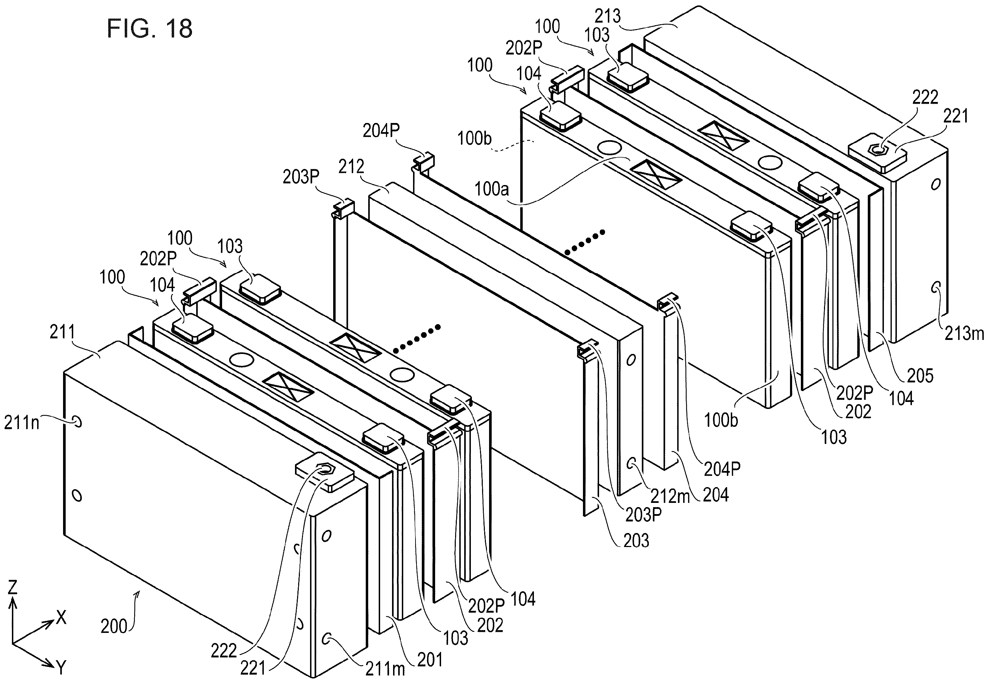

As illustrated in Fig. 18, battery 100 is formed in a square shape (rectangular parallelepiped shape). The positive electrode terminal 103 and the negative electrode terminal 104 are provided on one surface 100a of the battery 100 along the stacking direction X. The one surface 100a of the battery 100 corresponds to a part of the lid 102. The one surface 100a has a rectangular shape, and a length along the stacking direction X of the battery 100 is shorter than a length along the width direction Y (an intersecting direction) intersecting the stacking direction X of the battery 100. A control board 401 of the controller unit 400 faces another surface 100b, which is adjacent to and intersects the one surface 100a, of the battery 100.

### (Configuration of Holding Unit 200)

The holding unit 200 holds the plurality of batteries 100. In one battery 100 and the other battery 100 adjacent to each other along the stacking direction X, the positive electrode terminal 103 of the one battery 100 and the negative electrode terminal 104 of the other battery 100 are aligned in the stacking direction X. The holding unit 200 illustrated in Figs. 1 to 5, 7 to 9, and 14 to 19 includes a first end spacer 201, a cell spacer 202, a first intermediate spacer 203, a second intermediate spacer 204, and a second end spacer 205. In addition, the holding unit 200 includes a first end block 211, an intermediate block 212, and a second end block 213. In addition, the holding unit 200 includes an insulating member 221 and an insert nut 222. In addition, the holding unit 200 includes a first side plate 231, a second side plate 232, and fastening bolts 241. Hereinafter, constituent members included in the holding unit 200 will be described.

As illustrated in Fig. 18, the first end spacer 201 is provided between the first end block 211 and the battery 100. This battery 100 corresponds to the first battery 100 located on one end side (corresponding to the left end in Fig. 4) among the twelve stacked batteries 100. The first end spacer 201 insulates the first end block 211 and the battery 100 from each other. The first end spacer 201 covers a side surface along the width direction Y of each of the first end block 211 and the battery 100 and partially covers side surfaces along the stacking direction X of the battery 100. A thickness of the first end spacer 201 along the stacking direction X is sufficiently smaller than a thickness of the battery 100 along the stacking direction X. The first end spacer 201 is made of an insulating material.

As illustrated in Fig. 18, the cell spacer 202 is provided between the adjacent batteries 100. The cell spacer 202 holds the adjacent batteries 100 to be insulated from each other. The cell spacer 202 covers a side surface along the width direction Y of each of the adjacent batteries 100 and partially covers side surfaces along the stacking direction X of each of the adjacent batteries 100. A thickness of the cell spacer 202 along the stacking direction X is sufficiently smaller than the thickness of the battery 100 along the stacking direction X. The cell spacer 202 is made of an insulating material.

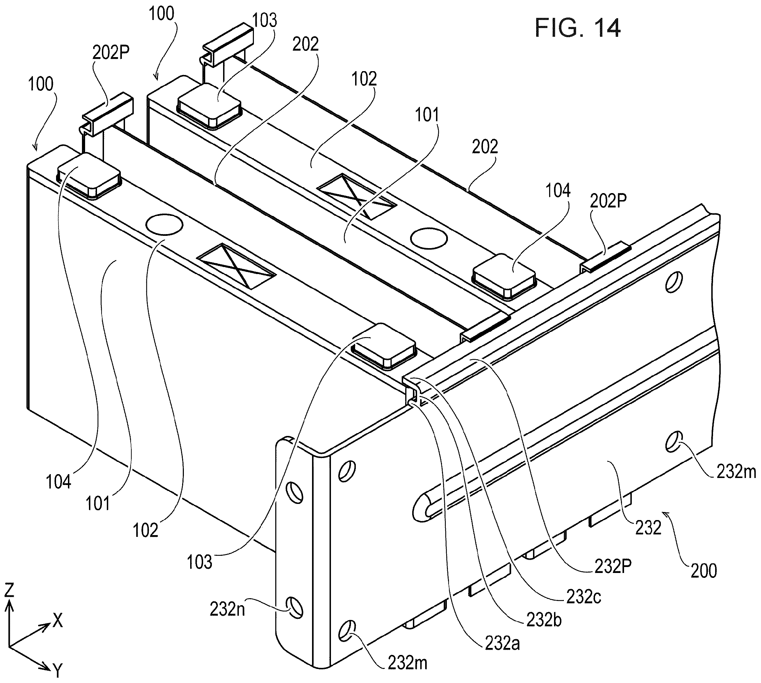

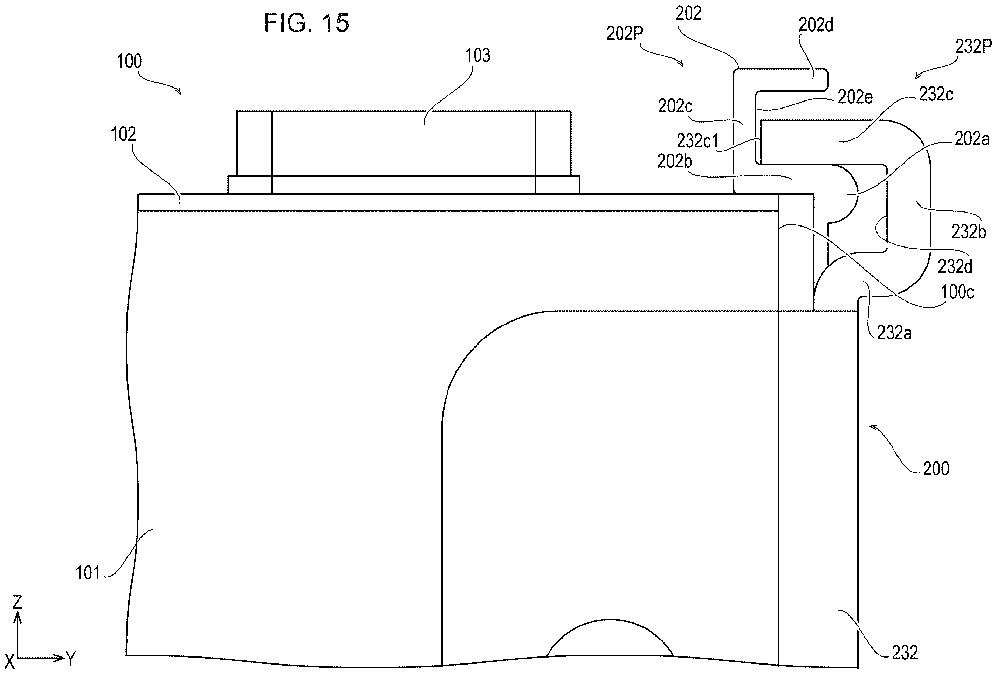

The cell spacer 202 is provided with a pair of rigid portions 202P formed in an upper portion along the stacking direction X as illustrated in Figs. 14, 15, 17, and 18. As illustrated in Fig. 18, the pair of rigid portions 202P is formed on both sides of the cell spacer 202 in the width direction Y. As illustrated in Fig. 15, the rigid portion 202P includes a protrusion 202a, a first rigid portion 202b, a second rigid portion 202c, a third rigid portion 202d, and an attachment portion 202e.

As illustrated in Fig. 15, the protrusion 202a of the cell spacer 202 projects from the battery 100 toward the first side plate 231 or the second side plate 232. The first rigid portion 202b extends along the width direction Y so as to approach the battery 100. Among the protrusions 202a of the pair of rigid portions 202P, one protrusion 202a located on the first side plate 231 side projects toward the first side plate 231. As illustrated in Fig. 15, the other protrusion 202a located on the second side plate 232 side projects toward the second side plate 232.

As illustrated in Fig. 15, the first rigid portion 202b of the cell spacer 202 is in contact with the lid 102 of the battery 100. The first rigid portion 202b is continuous with the protrusion 202a along the width direction Y. As illustrated in Fig. 15, the second rigid portion 202c extends from a distal end of the first rigid portion 202b along the height direction Z. The distal end of the first rigid portion 202b is a part of the first rigid portion 202b extending in the width direction Y, the part being relatively close to the center of the battery 100. As illustrated in Fig. 15, the third rigid portion 202d extends from a distal end of the second rigid portion 202c along the width direction Y similarly to the protrusion 202a. The distal end of the second rigid portion 202c is a part of the second rigid portion 202c extending in the height direction Z, the part being relatively far from the battery 100.

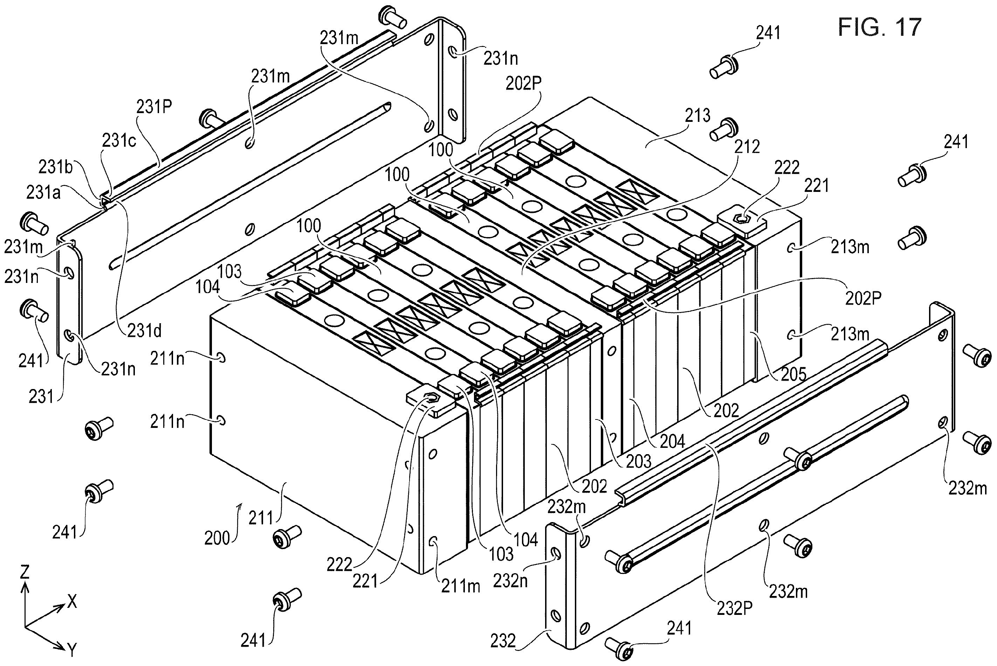

As illustrated in Fig. 15, the attachment portion 202e of the cell spacer 202 is configured by a part surrounded by the first rigid portion 202b, the second rigid portion 202c, and the third rigid portion 202d. An accommodating portion 232e is formed in a recessed shape. Of the pair of rigid portions 202P formed on the cell spacer 202, the attachment portion 202e of the rigid portion 202P located on the first side plate 231 side is opened toward the first side plate 231 as illustrated in Fig. 17. As illustrated in Fig. 17, the attachment portion 202e of the rigid portion 202P located on the second side plate 232 side is opened toward the second side plate 232. The attachment portion 202e is configured by a recessed recess to which a third rigid portion 232c of the second side plate 232 is attached. The attachment portion 202e is formed in a U shape.

As illustrated in Fig. 18, the first intermediate spacer 203 is provided between the intermediate block 212 and the battery 100 on a side relatively close to the first end block 211. This battery 100 corresponds to the sixth battery 100 from one the end side among the twelve stacked batteries 100. The first intermediate spacer 203 insulates the intermediate block 212 and the battery 100 from each other. The first intermediate spacer 203 covers a side surface along the width direction Y of each of the battery 100 and intermediate block 212 and partially covers side surfaces along the stacking direction X of the battery 100. A thickness of the first intermediate spacer 203 along the stacking direction X is sufficiently smaller than the thickness of the battery 100 along the stacking direction X. As illustrated in Fig. 18, a pair of rigid portions 203P is formed on both sides of the first intermediate spacer 203 in the width direction Y. A configuration of the rigid portion 203P of the first intermediate spacer 203 is similar to a configuration of the rigid portion 202P of the cell spacer 202. The first intermediate spacer 203 is made of an insulating material.

As illustrated in Fig. 18, the second intermediate spacer 204 is provided between the intermediate block 212 and the battery 100 on a side relatively close to the second end block 213. This battery 100 corresponds to the seventh battery 100 from one the end side among the twelve stacked batteries 100. The second intermediate spacer 204 insulates the intermediate block 212 and the battery 100 from each other. The second intermediate spacer 204 covers a side surface along the width direction Y of each of the intermediate block 212 and the battery 100 and partially covers side surfaces along the stacking direction X of the intermediate block 212 and the battery 100. A thickness of the second intermediate spacer 204 along the stacking direction X is sufficiently smaller than the thickness of the battery 100 along the stacking direction X. As illustrated in Fig. 18, a pair of rigid portions 204P is formed on both sides of the second intermediate spacer 204 in the width direction Y. A configuration of the rigid portion 204P of the second intermediate spacer 204 is similar to a configuration of the rigid portion 202P of the cell spacer 202. The second intermediate spacer 204 is made of an insulating material.

As illustrated in Fig. 18, the second end spacer 205 is provided between the battery 100 and the second end block 213. This battery 100 corresponds to the twelfth battery 100 located on another end side (corresponding to the right end in Fig. 4) among the twelve stacked batteries 100. The second end spacer 205 insulates the battery 100 and the second end block 213 from each other. The second end spacer 205 covers a side surface along the width direction Y of each of the battery 100 and the second end block 213 and partially covers side surface along the stacking direction X of the battery 100. A thickness of the second end spacer 205 along the stacking direction X is sufficiently smaller than a thickness of the battery 100 along the stacking direction X. The second end spacer 205 is made of an insulating material.

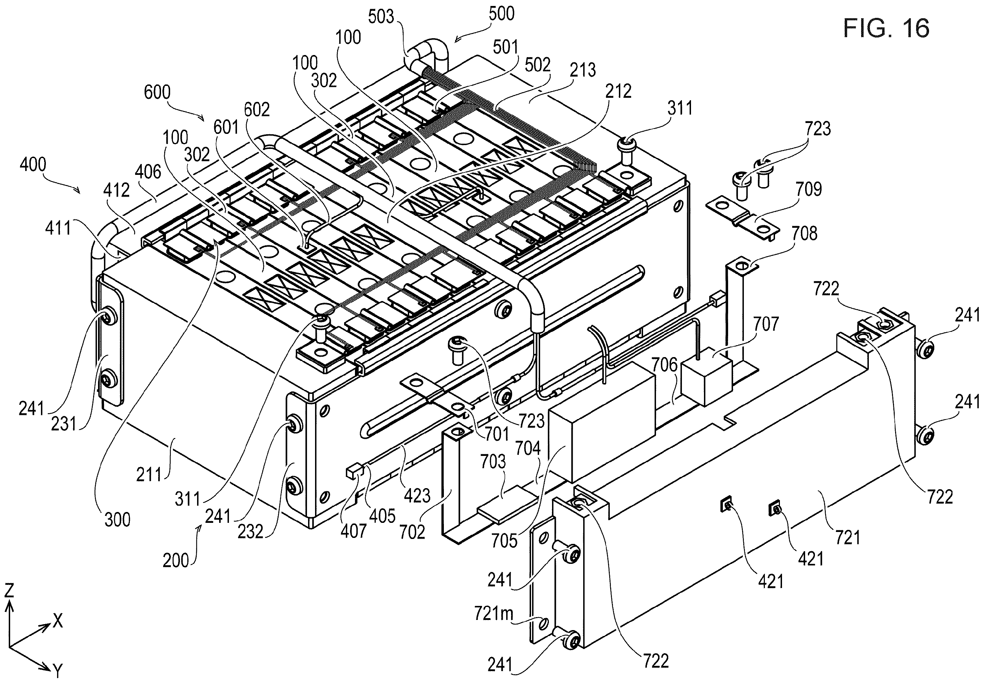

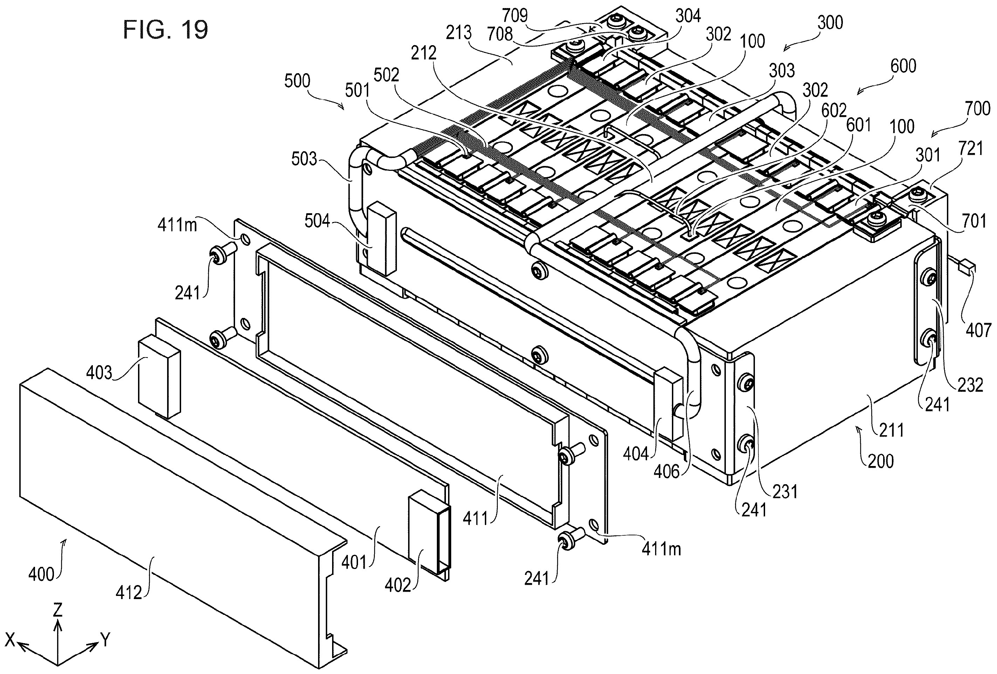

As illustrated in Figs. 4 and 18, the first end block 211 is stacked on the first battery 100 located on the one end side among the twelve stacked batteries 100 with the first end spacer 201 interposed therebetween. The first end block 211 extends along the width direction Y (intersecting direction) intersecting the stacking direction X of the battery 100. The first end block 211 is a support member that is adjacent to the battery 100 located at an end portion along the stacking direction X and supports the battery 100. The first end block 211 is formed in a rectangular parallelepiped shape extending in the width direction Y. In the first end block 211, the fastening bolts 241 are screwed into a plurality of insertion holes 211m formed in side surfaces along the stacking direction X illustrated in Fig. 18 and a plurality of insertion holes 211n formed in a side surface along the width direction Y. The first end block 211 is fixed to the first side plate 231 by the fastening bolts 241 as illustrated in Figs. 4 and 19. Similarly, the first end block 211 is fixed to the second side plate 232 by the fastening bolts 241 as illustrated in Figs. 4 and 16. The first end block 211 is made of metal, for example, and has sufficient rigidity. Here, the first end block 211 has particularly a magnetic shielding property when being made of a conductor such as metal. In addition, the first end block 211 has particularly an electrical shielding property when being made of resin or plastic. The electrical shielding property refers to, for example, a characteristic of blocking or attenuating an influence of an electric field or a magnetic field on a communication line from the outside by a conductor arranged in the vicinity of the communication line.

As illustrated in Figs. 4 and 18, the intermediate block 212 is stacked between the first intermediate spacer 203 and the second intermediate spacer 204. That is, the intermediate block 212 is located, for example, between the sixth battery 100 and the seventh battery 100 among the twelve stacked batteries 100. The intermediate block 212 is a support member that is adjacent to the battery 100 along the width direction Y of the battery 100 and supports the battery 100. The intermediate block 212 is formed in a rectangular parallelepiped shape extending in the width direction Y. In the intermediate block 212, the fastening bolts 241 are screwed into a plurality of insertion holes 212m formed in side surfaces along the stacking direction X illustrated in Fig. 18. The intermediate block 212 is fixed to the first side plate 231 by the fastening bolts 241 as illustrated in Fig. 19. Similarly, the intermediate block 212 is fixed to the second side plate 232 by the fastening bolts 241 as illustrated in Fig. 16. The intermediate block 212 is made of metal or resin, for example, and has sufficient rigidity. Here, the intermediate block 212 has particularly a magnetic shielding property when being made of a conductor such as metal. In addition, the intermediate block 212 has particularly an electrical shielding property when being made of resin or plastic.

As illustrated in Figs. 4 and 18, the second end block 213 is stacked on the twelfth battery 100 located on the another end side among the twelve stacked batteries 100 with the second end spacer 205 interposed therebetween. The second end block 213 extends along the width direction Y of the battery 100. The second end block 213 is a support member that is adjacent to the battery 100 located at an end portion along the stacking direction X and supports the battery 100. The second end block 213 is formed in a rectangular parallelepiped shape extending in the width direction Y. In the second end block 213, the fastening bolts 241 are screwed into a plurality of insertion holes 213m formed in side surfaces along the stacking direction X illustrated in Fig. 18 and a plurality of insertion holes formed in a side surface along the width direction Y. The second end block 213 is fixed to the first side plate 231 by the fastening bolts 241 as illustrated in Figs. 4 and 19. Similarly, the second end block 213 is fixed to the second side plate 232 by the fastening bolts 241 as illustrated in Figs. 4 and 16. The second end block 213 is made of metal, for example, and has sufficient rigidity. Here, the second end block 213 has particularly a magnetic shielding property when being made of a conductor such as metal. In addition, the second end block 213 has particularly an electrical shielding property when being made of resin or plastic.

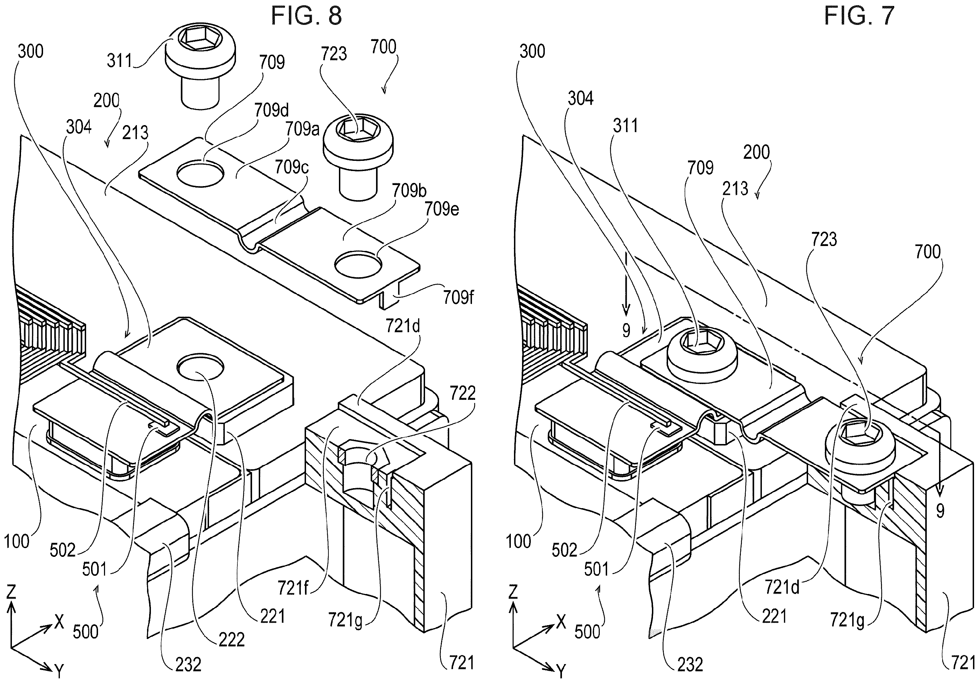

The insulating member 221 is inserted into a recess located in the vicinity of the junction unit 700 on an upper surface of the first end block 211 as illustrated in Fig. 18. In addition, the insulating member 221 is inserted into a recess located in the vicinity of the junction unit 700 on an upper surface of the second end block 213 as illustrated in Figs. 7 to 9 and 18. The insulating member 221 inserted into the second end block 213 corresponds to another holding member that holds a negative-electrode-side connection terminal 709. The insulating member 221 is formed in, for example, a rectangular parallelepiped shape. The insulating member 221 is made of an insulating material.

The insulating member 221 may have the following configuration. That is, the insulating member 221 may be molded integrally with the first end spacer 201, or may be molded separately from the first end spacer 201 and then joined to the first end spacer 201. In such a case, the first end block 211 has the recess for accommodating the insulating member 221 along the stacking direction X on a surface facing the first end spacer 201. Similarly, the insulating member 221 may be molded integrally with the second end spacer 205, or may be molded separately from the second end spacer 205 and then joined to the second end spacer 205. In such a case, the second end block 213 has the recess for accommodating the insulating member 221 along the stacking direction X on a surface facing the second end spacer 205.

The insert nut 222 is an engagement member and is embedded in the recess formed in the upper surface of the insulating member 221 as illustrated in Figs. 8, 9, and 18. In the insert nut 222, for example, a fastening bolt 311 which is a first fixing member is engaged with the negative-electrode-side connection terminal 709 interposed therebetween. As a modification of the embodiment, instead of the insert nut 222, an engagement portion corresponding to a screw groove for engagement the fastening bolt 311 may be formed in the insulating member 221 provided in the second end block 213.

As illustrated in Fig. 1, the first side plate 231 is arranged at one end portion in the width direction Y of the plurality of batteries 100 along the stacking direction X of the plurality of stacked batteries 100. As illustrated in Fig. 1, the first side plate 231 is located on the controller unit 400 side.

The first side plate 231 is a holding member that holds the plurality of batteries 100 along the stacking direction X. As illustrated in Fig. 17, in the first side plate 231, the fastening bolts 241 are inserted into a plurality of insertion holes 231m formed in a side surface along the stacking direction X and a plurality of insertion holes 231n formed in side surfaces along the width direction Y. As illustrated in Figs. 1 and 19, the first side plate 231 is fixed to the first end block 211, the intermediate block 212, and the second end block 213 by the fastening bolts 241. As illustrated in Fig. 1, the controller unit 400 is attached to the first side plate 231.

As illustrated in Fig. 17, a rigid portion 231P is formed in an upper portion of the first side plate 231 along the stacking direction X. As illustrated in Fig. 17, the rigid portion 231P includes a first rigid portion 231a, a second rigid portion 231b, a third rigid portion 231c, and an accommodating portion 231d.

The first rigid portion 231a of the first side plate 231 extends along the width direction Y so as to be separated from the battery 100. The second rigid portion 231b extends along the height direction Z from a distal end of the first rigid portion 231a. The distal end of the first rigid portion 231a is a part of the first rigid portion 231a extending in the width direction Y, the part being relatively far from the battery 100. The third rigid portion 231c is a projection, and projects along the width direction Y so as to approach the battery 100 from a distal end of the second rigid portion 231b. The distal end of the second rigid portion 231b is a part of the second rigid portion 231b extending in the height direction Z, the part being relatively far from the battery 100. The third rigid portion 231c of the first side plate 231 is in contact with the protrusion 202a of the cell spacer 202 along a direction intersecting the stacking direction X, that is, the height direction Z. A distal end of the third rigid portion 231c protrudes inward of the battery 100 from an outer edge 100c of the battery 100.

The accommodating portion 231d of the first side plate 231 is configured by a part surrounded by the first rigid portion 231a, the second rigid portion 231b, and the third rigid portion 231c. The accommodating portion 231d is opened toward the battery 100 along the stacking direction X. The accommodating portion 231d is configured by a recessed recess that accommodates the protrusion 202a of the cell spacer 202. The accommodating portion 231d is formed in a U shape.

As illustrated in Fig. 1, the second side plate 232 is arranged at the other end portion in the width direction Y of the plurality of batteries 100 along the stacking direction X of the plurality of stacked batteries 100. As illustrated in Fig. 1, the second side plate 232 is located on the junction unit 700 side.

The second side plate 232 is a holding member that holds the plurality of batteries 100 along the stacking direction X. As illustrated in Fig. 17, in the second side plate 232, the fastening bolts 241 are inserted into a plurality of insertion holes 232m formed in a side surface along the stacking direction X and a plurality of insertion holes 232n formed in side surfaces along the width direction Y. As illustrated in Figs. 1 and 16, the second side plate 232 is fixed to the first end block 211, the intermediate block 212, and the second end block 213 by the fastening bolts 241. As illustrated in Fig. 1, the junction unit 700 is attached to the second side plate 232.

As illustrated in Fig. 17, a rigid portion 232P is formed in an upper portion of the second side plate 232 along the stacking direction X. As illustrated in Fig. 15, the rigid portion 232P includes a first rigid portion 232a, a second rigid portion 232b, a third rigid portion 232c, and an accommodating portion 232d.

As illustrated in Fig. 15, the first rigid portion 232a of the second side plate 232 extends along the width direction Y so as to be separated from the battery 100. The second rigid portion 232b extends along the height direction Z from a distal end of the first rigid portion 232a. The distal end of the first rigid portion 232a is a part of the first rigid portion 232a extending in the width direction Y, the part being relatively far from the battery 100. The third rigid portion 232c is a projection, and projects along the width direction Y so as to approach the battery 100 from a distal end of the second rigid portion 232b. The distal end of the second rigid portion 232b is a part of the second rigid portion 232b extending in the height direction Z, the part being relatively far from the battery 100. As illustrated in Fig. 15, the third rigid portion 232c of the second side plate 232 is in contact with the protrusion 202a of the cell spacer 202. As illustrated in Fig. 15, a distal end 232c1 of the third rigid portion 232c projects inward of the battery 100 from the outer edge 100c of the battery 100.

The accommodating portion 232d of the second side plate 232 is configured by a part surrounded by the first rigid portion 232a, the second rigid portion 232b, and the third rigid portion 232c. The accommodating portion 232d is opened toward the battery 100 along the stacking direction X. The accommodating portion 232d is configured by a recessed recess that accommodates the protrusion 202a of the cell spacer 202. The accommodating portion 232d is formed in a U shape. In Fig. 15, the accommodating portion 232d is illustrated in a state where the U shape is rotated by 180 degrees.

The fastening bolt 241 is a fastening member. The first end block 211 and the case 721 of the junction unit 700 are directly fastened by the fastening bolts 241 along the width direction Y and the stacking direction X of the battery 100. The second end block 213 and the case 721 of the junction unit 700 are directly fastened by the fastening bolts 241 along the width direction Y and the stacking direction X of the battery 100. As illustrated in Figs. 4 and 19, the fastening bolts 241 fasten the first side plate 231 to the first end block 211, fasten the first side plate 231 to the intermediate block 212, and fasten the first side plate 231 to the second end block 213. In addition, as illustrated in Figs. 4 and 16, the fastening bolts 241 further fasten the second side plate 232 to the first end block 211, fasten the second side plate 232 to the intermediate block 212, and fasten the second side plate 232 to the second end block 213.

### (Configuration of Bus Bar Unit 300)

The bus bar unit 300 electrically connects the plurality of batteries 100. The bus bar unit 300 illustrated in Figs. 1, 2, 4, 5, 7 to 9, 16, 19, and 21 includes a first end bus bar 301, a plurality of bus bars 302, an intermediate bus bar 303, a second end bus bar 304, the fastening bolts 311, and a bus bar holder 321. Hereinafter, constituent members included in the bus bar unit 300 will be described.

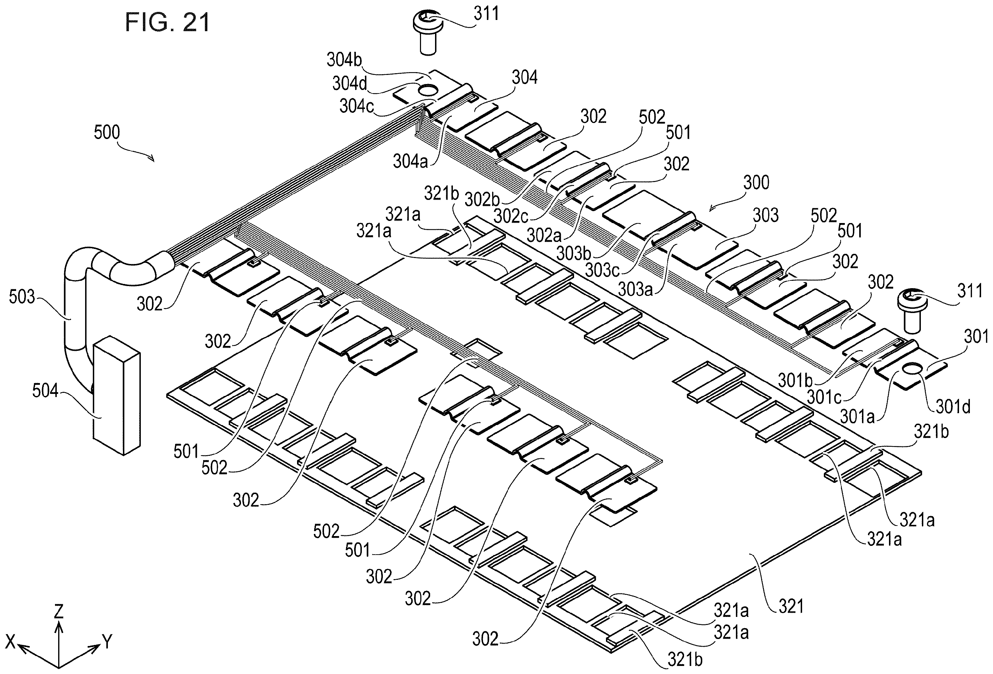

As illustrated in Figs. 4 and 21, the first end bus bar 301 is joined to a first relay bus bar 701 of the junction unit 700 and the positive electrode terminal 103 of the first battery 100 among the twelve stacked batteries 100. As illustrated in Fig. 21, the first end bus bar 301 includes a first joining portion 301a having a plate shape, a second joining portion 301b having a plate shape, a coupling portion 301c having a curved shape, and an insertion hole 301d. The first joining portion 301a is joined to the first relay bus bar 701 of the junction unit 700. The second joining portion 301b is joined to the positive electrode terminal 103 of the first battery 100 among the twelve stacked batteries 100. The coupling portion 301c connects the first joining portion 301a and the second joining portion 301b. The insertion hole 301d is formed in the first joining portion 301a. The fastening bolt 311 is inserted into the insertion hole 301d. The first end bus bar 301 is made of a clad material formed by joining copper and aluminum, copper, or aluminum. In a case where the first end bus bar 301 is made of the clad material, for example, the first joining portion 301a is made of copper, and the second joining portion 301b is made of aluminum.

As illustrated in Fig. 4, the bus bar 302 electrically connects one battery 100 and another battery 100. As illustrated in Fig. 4, the bus bar 302 is joined to the positive electrode terminal 103 of one of the batteries 100 adjacent along the stacking direction X and the negative electrode terminal 104 of the other of the batteries 100 adjacent along the stacking direction X, except for the sixth and seventh batteries 100 among the twelve stacked batteries 100. As illustrated in Fig. 21, the bus bar 302 includes a first joining portion 302a having a plate shape, a second joining portion 302b having a plate shape, and a coupling portion 302c having a curved shape. The first joining portion 302a is joined to the negative electrode terminal 104 of one of the adjacent batteries 100. The second joining portion 302b is joined to the positive electrode terminal 103 of the other adjacent battery 100. The coupling portion 302c couples the first joining portion 302a and the second joining portion 302b. The bus bar 302 is made of, for example, a clad material obtained by joining copper and aluminum, copper, or aluminum. In a case where the bus bar 302 is made of the clad material, for example, the first joining portion 302a is made of copper, and the second joining portion 302b is made of aluminum.

As illustrated in Fig. 4, the intermediate bus bar 303 electrically connects one battery 100 and another battery 100. As illustrated in Fig. 4, the intermediate bus bar 303 is joined to the sixth and seventh batteries 100 located at the center along the stacking direction X among the twelve stacked batteries 100. As illustrated in Fig. 21, the intermediate bus bar 303 includes a first joining portion 303a having a plate shape, a second joining portion 303b having a plate shape, and a coupling portion 303c having a curved shape. The first joining portion 303a is joined to the negative electrode terminal 104 of the sixth battery 100. The second joining portion 303b is joined to the positive electrode terminal 103 of the seventh battery 100. The coupling portion 303c connects the first joining portion 303a and the second joining portion 303b. Here, the intermediate bus bar 303 electrically joins the sixth and seventh batteries 100 with the intermediate block 212 interposed therebetween. Thus, the intermediate bus bar 303 is formed to have a longer overall length along the stacking direction X than that of the bus bar 302. The intermediate bus bar 303 is made of, for example, a clad material obtained by joining copper and aluminum, copper, or aluminum. In a case where the intermediate bus bar 303 is made of the clad material, for example, the first joining portion 303a is made of copper, and the second joining portion 303b is made of aluminum.

As illustrated in Fig. 4, the second end bus bar 304 is joined to the negative electrode terminal 104 of the twelfth battery 100 among the twelve stacked batteries 100 and the negative-electrode-side connection terminal 709 of the junction unit 700. As illustrated in Fig. 21, the second end bus bar 304 includes a first joining portion 304a having a plate shape, a second joining portion 304b having a plate shape, a coupling portion 304c having a curved shape, and an insertion hole 304d. The first joining portion 304a is joined to the negative electrode terminal 104 of the twelfth battery 100. The second joining portion 304b is joined to the negative-electrode-side connection terminal 709 of the junction unit 700. The coupling portion 304c couples the first joining portion 304a and the second joining portion 304b. The insertion hole 304d is formed in the second joining portion 304b. The fastening bolt 311 is inserted into the insertion hole 304d. The second end bus bar 304 is made of, for example, copper.

The fastening bolt 311 is the first fixing member, and fastens the first relay bus bar 701 of the junction unit 700 and the first end bus bar 301 to be electrically conducted as illustrated in Figs. 4 and 21. This fastening bolt 311 is fixed to the insert nut 222 provided in the first end block 211 illustrated in Fig. 18. In addition, the fastening bolt 311 causes the second end bus bar 304 and the negative-electrode-side connection terminal 709 of the junction unit 700 to be electrically conducted as illustrated in Figs. 4 and 21. This fastening bolt 311 is fixed to the insert nut 222 provided in the second end block 213 illustrated in Fig. 18.

As illustrated in Fig. 1, the bus bar holder 321 integrally holds the first end bus bar 301, the plurality of bus bars 302, the intermediate bus bar 303, and the second end bus bar 304. In addition, the bus bar holder 321 covers and insulates the plurality of stacked batteries 100. As illustrated in Fig. 21, the bus bar holder 321 is formed in a plate shape. A plurality of opening portions 321a are formed in the bus bar holder 321. Each of the opening portions 321a exposes the first joining portion or the second joining portion of the first end bus bar 301, the plurality of bus bars 302, the intermediate bus bar 303, or the second end bus bar 304 toward the battery 100 side. Each of the opening portions 321a is larger than the first joining portion or the second joining portion of the corresponding bus bar. A plurality of holding portions 321b are formed in the bus bar holder 321. Each of the holding portions 321b holds an end portion of the first joining portion or the second joining portion of the first end bus bar 301, the plurality of bus bars 302, the intermediate bus bar 303, and the second end bus bar 304. Each of the holding portions 321b is formed at an edge of the opening portion 321a. Each of the holding portions 321b includes a linear groove along a surface of the bus bar holder 321. The end portion of the first joining portion or the second joining portion of the corresponding bus bar is inserted into the groove provided in each of the holding portions 321b.

### (Configuration of Controller Unit 400)

The controller unit 400 is a control unit. The controller unit 400 controls input and output of power of the plurality of batteries 100. In general, the controller unit 400 is referred to as a battery energy control module (BECM). The controller unit 400 illustrated in Figs. 1 to 6, 16, 19, and 20 includes the control board 401, a first socket 402, a second socket 403, a first connector 404, electric wires 405, a harness 406, and an external connection connector 407. In addition, the controller unit 400 includes a case 411 and a cover 412. In addition, the controller unit 400 includes a fastening member 421, a covering member 422, and a protective member 423.

The controller unit 400 is arranged on side surfaces of the plurality of batteries 100 along stacking direction X in which the plurality of batteries 100 are stacked. The controller unit 400 faces the junction unit 700 along the width direction Y with the plurality of stacked batteries 100 interposed therebetween. That is, the controller unit 400 is arranged so as to sandwich a pair of side surfaces of each of the plurality of stacked batteries 100 together with the junction unit 700. Hereinafter, constituent members included in the controller unit 400 will be described.

The control board 401 is a control member that controls the plurality of batteries 100. The control board 401 is provided on the controller unit 400 side in the width direction Y of the battery 100. The control board 401 includes a ROM in which a program related to the control of the batteries 100 is recorded, a CPU that controls the batteries 100, a RAM that temporarily stores control states of the batteries 100, and the like. As illustrated in Fig. 19, the control board 401 extends in the stacking direction X.

As illustrated in Fig. 19, the first socket 402 is attached to one end portion of the control board 401 along the stacking direction X in a part of the holding unit 200 adjacent to the first end block 211. The first connector 404 is inserted into the first socket 402.

As illustrated in Fig. 19, the second socket 403 is attached to the other end portion of the control board 401 along the stacking direction X in a part of the holding unit 200 adjacent to the second end block 213. A second connector 504 of the voltage detection unit 500 is inserted into the second socket 403.

The first connector 404 electrically connects the first socket 402 and the electric wire 405. The first connector 404 is configured to be attachable to and detachable from the first socket 402.

The electric wire 405 is a communication line and is conducted to the control board 401. The electric wire 405 includes one or more conductors and an insulator covering the conductors. The electric wire 405 transmits a signal related to control of the batteries 100 or the like between the control board 401 and the electric device 1000 on the vehicle side. One end of the electric wire 405 is connected to the first connector 404. The other end of the electric wire 405 is connected to the external connection connector 407. As illustrated in Fig. 4, the electric wire 405 extends from the controller unit 400 side (one end side) toward the junction unit 700 side (another end side) facing the controller unit 400 side along the width direction Y of the battery 100. The electric wire 405 is covered with the harness 406. The electric wire 405 covered with the harness 406 is arranged to face the intermediate block 212 between the controller unit 400 and the junction unit 700. As illustrated in Fig. 4, the electric wire 405 faces the intermediate block 212 across the bus bar holder 321 covering the plurality of stacked batteries 100. That is, the electric wire 405 indirectly faces the intermediate block 212 with the harness 406 and the bus bar holder 321 interposed therebetween in a region from the controller unit 400 side to the junction unit 700 side.

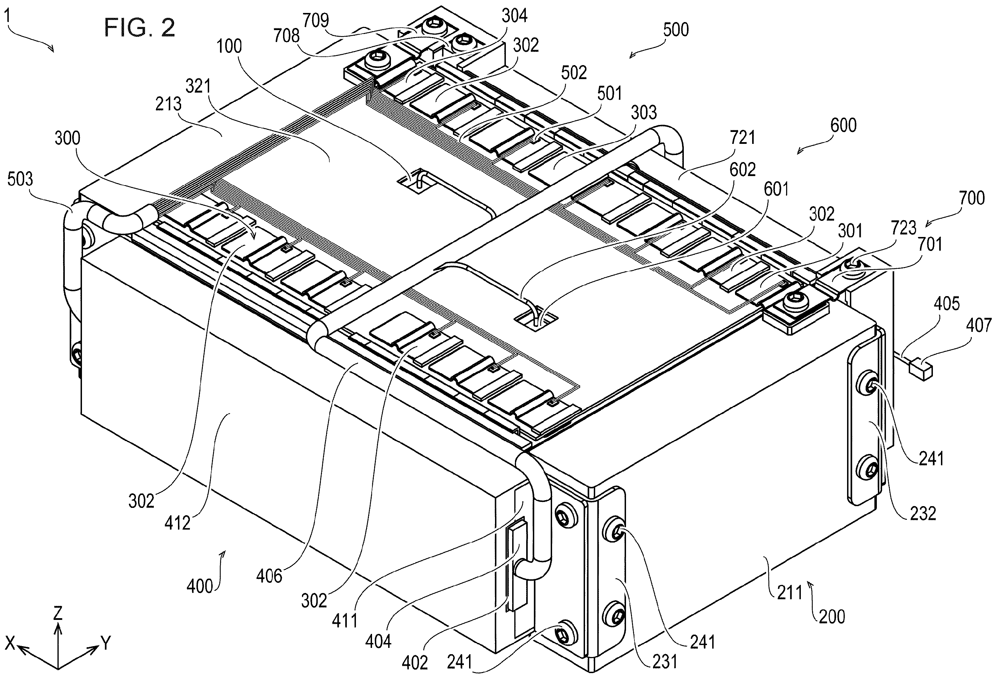

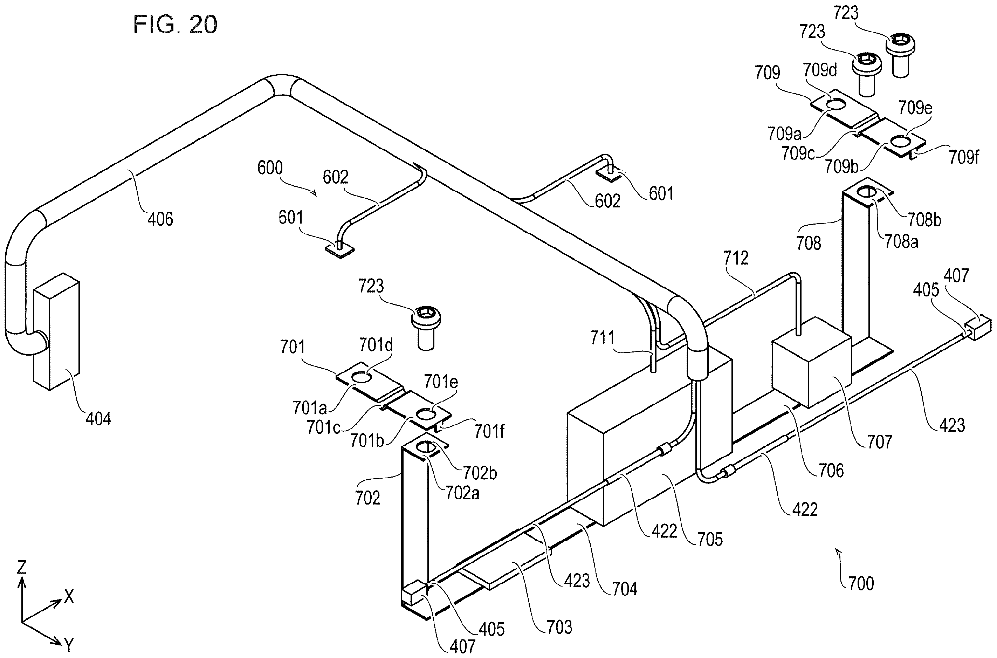

As illustrated in Fig. 20, the harness 406 covers a plurality of the electric wires 405 in a bundle. As illustrated in Figs. 1 and 2, the harness 406 covering the plurality of electric wires 405 extends from the first connector 404 toward an upper surface of the cover 412. As illustrated in Fig. 4, the harness 406 extending to the upper surface of the cover 412 extends toward the intermediate block 212 of the holding unit 200 along the upper surface of the cover 412. As illustrated in Fig. 4, the harness 406 extending to an end portion of the intermediate block 212 extends from the controller unit 400 toward the junction unit 700 along an upper surface of the intermediate block 212. That is, the harness 406 covering the plurality of electric wires 405 is arranged to face the intermediate block 212 across the bus bar holder 321 illustrated in Fig. 1 between the controller unit 400 and the junction unit 700.

The external connection connector 407 is a connector that is provided at a distal end of the electric wire 405 and is electrically connected to an external device. As illustrated in Fig. 20, the external connection connector 407 is connected to the distal end of each of the electric wires 405. The external connection connector 407 is connected to, for example, a socket of the electric device 1000 provided in the vehicle.

As illustrated in Fig. 19, the case 411 is formed in a box shape and includes an opening. The case 411 extends in the stacking direction X. The case 411 accommodates the control board 401. The case 411 exposes the first socket 402 to the outside on one end side along the stacking direction X. The case 411 exposes the second socket 403 to the outside on the another end side along the stacking direction X. The case 411 has a recess (not illustrated) formed on a side surface facing the first side plate 231. The recess formed in the case 411 prevents interference of the fastening bolt 241 fastening the first side plate 231 to the intermediate block 212, and interference of a projecting portion formed linearly along the stacking direction X in the first side plate 231. As illustrated in Fig. 19, the fastening bolts 241 are inserted into a plurality of insertion holes 411m formed in a side surface of the case 411 along the stacking direction X. As illustrated in Figs. 2 and 19, the case 411 is fixed to the first side plate 231 by the fastening bolts 241.

As illustrated in Fig. 2, the cover 412 is attached to the case 411. As illustrated in Figs. 2 and 19, the cover 412 seals the control board 401 together with the case 411.

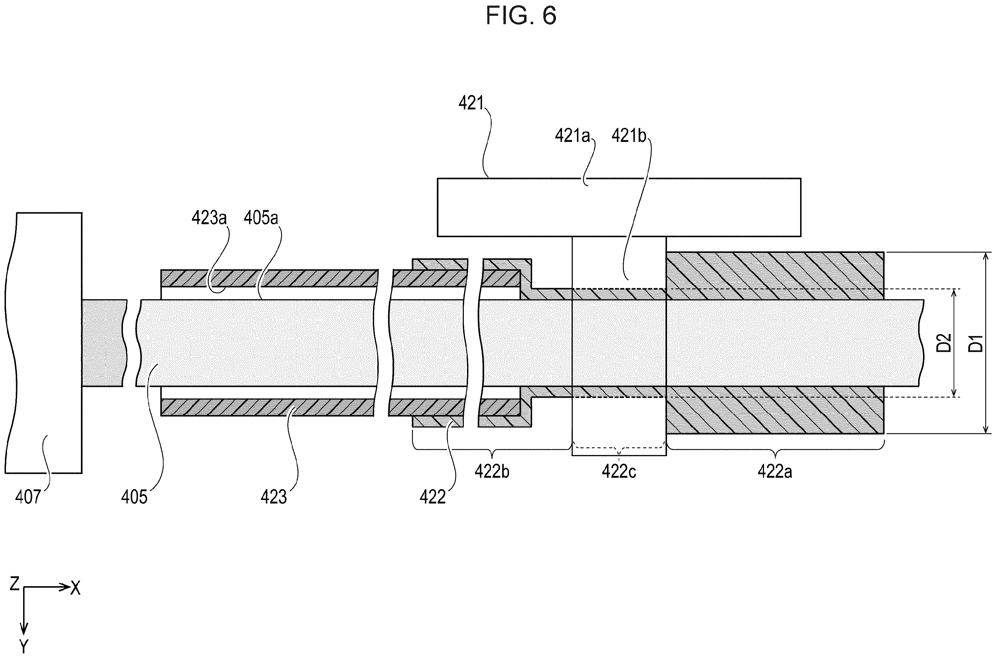

As illustrated in Figs. 1, 5, and 6, the fastening member 421 fastens the electric wire 405 with the covering member 422 interposed therebetween. The fastening member 421 fixes the electric wire 405 to the case 721. As illustrated in Fig. 1, the fastening member 421 is attached to a side surface of the case 721. As illustrated in Fig. 6, the fastening member 421 includes a body portion 421a joined to the case 721 and a fastening portion 421b fastening the electric wire 405 covered with the covering member 422. The body portion 421a is formed in a plate shape and is bonded to the case 721. The fastening portion 421b surrounds and fastens a portion to be fastened 422c of the covering member 422. The fastening portion 421b is formed in an annular shape and is attached to the body portion 421a. The fastening portion 421b includes a binding band. The electric wire 405 is fastened by the binding band with the covering member 422 interposed therebetween. For example, an insulator lock (registered trademark) is used for the binding band. The fastening portion 421b fastens the electric wire 405 by annularly binding the electric wire 405 with the covering member 422 interposed therebetween. An inner diameter (an outer diameter D2) of the fastening portion 421b is smaller than an outer diameter D1 of a first covering portion 422a. The fastening portion 421b restricts movement of the electric wire 405 with the covering member 422 interposed therebetween. Specifically, the fastening portion 421b restricts the movement of the electric wire 405, for example, in a case where the electric wire 405 is pulled.

As illustrated in Fig. 6, the covering member 422 covers the electric wire 405. The covering member 422 includes the first covering portion 422a, a second covering portion 422b, and the portion to be fastened 422c. The first covering portion 422a is a covering portion, and is exposed from the fastening portion 421b of the fastening member 421 to the control board 401 side while covering the electric wire 405. The first covering portion 422a is located between the fastening portion 421b of the fastening member 421 and the control board 401. The second covering portion 422b is exposed from the fastening portion 421b of the fastening member 421 to the external connection connector 407 side. The second covering portion 422b is located between the fastening portion 421b of the fastening member 421 and the external connection connector 407. The portion to be fastened 422c is surrounded and fastened by the fastening portion 421b of the fastening member 421 while covering the electric wire 405. The first covering portion 422a and the portion to be fastened 422c are continuous. The portion to be fastened 422c and the second covering portion 422b are continuous. That is, the first covering portion 422a, the portion to be fastened 422c, and the second covering portion 422b are integrally formed. The outer diameter D1 of the first covering portion 422a is larger than the outer diameter D2 of the portion to be fastened 422c.

The covering member 422 is configured by, for example, winding an elongated tape around the electric wire 405. The tape has adhesiveness on a surface facing the electric wire 405. As the adhesive tape, for example, a vinyl tape is used. The covering member 422 is fastened by the fastening portion 421b of the fastening member 421. The vinyl tape wound around the electric wire 405 is continuously provided in the entire region from the first covering portion 422a to the second covering portion 422b illustrated in Fig. 6. That is, in the electric wire 405, the vinyl tape is also provided on the portion to be fastened 422c fastened by the fastening portion 421b of the fastening member 421.

As illustrated in Fig. 6, the covering member 422 has different outer diameters with the fastening portion 421b of the fastening member 421 as a boundary. In the covering member 422, the outer diameter of the first covering portion 422a located on the harness 406 side with the fastening portion 421b as the boundary is referred to as the outer diameter D1. In the covering member 422, the outer diameter of the second covering portion 422b located on the external connection connector 407 side with the fastening portion 421b as the boundary is referred to as D2. The outer diameter D1 is set to be larger than the outer diameter D2. That is, the inner diameter of the fastening portion 421b corresponding to the outer diameter D2 is set to be smaller than the outer diameter D1. The outer diameter D1 and the outer diameter D2 of the covering member 422 are set by the amount of the vinyl tape wound around the electric wire 405. As the amount of the vinyl tape wound around the electric wire 405 is increased, the outer diameters become larger.

The covering member 422 may have the following configuration. That is, the covering member 422 is configured using, for example, heat shrinkable tubes. Specifically, first, a heat shrinkable tube is inserted into a region of the electric wire 405 where the second covering portion 422b is to be provided from the first covering portion 422a illustrated in Fig. 6 and then is thermally shrunk. Next, in the electric wire 405 covered with the heat shrinkable tube, a heat shrinkable tube is newly inserted and thermally shrunk in a region where the first covering portion 422a illustrated in Fig. 6 is to be provided. That is, the covering member 422 is configured using a cylindrical tube having a step. The electric wire 405 covered with the heat shrinkable tubes is fastened by the fastening portion 421b of the fastening member 421.

As illustrated in Fig. 6, the protective member 423 protects the electric wire 405. The protective member 423 is made of, for example, a cylindrical vinyl tube. The protective member 423 covers the outer periphery of the second covering portion 422b of the electric wire 405 facing the first covering portion 422a with the portion to be fastened 422c interposed therebetween, and is joined to the covering member 422. The protective member 423 covers the outer periphery of the electric wire 405 on a side farther from the control board 401 than the portion to be fastened 422c. The protective member 423 is provided along the electric wire 405 up to the vicinity of the external connection connector 407 provided at the distal end of the electric wire 405. A portion of the protective member 423 is covered with the second covering portion 422b of the covering member 422 and is joined to the second covering portion 422b. As illustrated in Fig. 6, an inner peripheral surface 423a of the protective member 423 faces an outer peripheral surface 405a of the electric wire 405 with a gap interposed therebetween. In Fig. 6, an outer diameter of the protective member 423 is illustrated to be smaller than the outer diameter of the first covering portion 422a of the covering member 422. In the embodiment, the outer diameter of the protective member 423 may be larger than the outer diameter of the first covering portion 422a of the covering member 422.

### (Configuration of Voltage Detection Unit 500)

The voltage detection unit 500 detects a voltage of the battery 100 under the control of the controller unit 400. The voltage detection unit 500 illustrated in Figs. 1, 2, 4, 5, 7, 8, 16, 19, and 21 includes voltage detection terminals 501, electric wires 502, a harness 503, and a second connector 504. Hereinafter, constituent members included in the voltage detection unit 500 will be described.

The voltage detection terminal 501 has sufficient conductivity and is formed in a plate shape. As illustrated in Figs. 4 and 21, the voltage detection terminal 501 is joined to each of the first end bus bar 301, the plurality of bus bars 302, the intermediate bus bar 303, and the second end bus bar 304 of the bus bar unit 300.

The electric wire 502 is a second communication line that is joined to the voltage detection terminal 501 and conducted to the control board 401. As illustrated in Figs. 4 and 21, the electric wire 502 is joined to each of the voltage detection terminals 501.

The electric wire 502 is provided on the same surface, formed by the plurality of stacked batteries 100, with the electric wire 405 of the controller unit 400, and the same surface corresponds to an upper surface of the battery 100 to which the positive electrode terminal 103 and the negative electrode terminal 104 are attached. As illustrated in Fig. 4, each of the electric wires 502 extends in the stacking direction X toward end portions of the plurality of stacked batteries 100, that is, toward the second end block 213. That is, the electric wire 502 is orthogonal to the electric wire 405 extending in the width direction Y while facing the intermediate block 212. Each of the electric wires 502 reaching the second end block 213 extends in the width direction Y toward the control board 401 of the controller unit 400.

As illustrated in Fig. 21, the harness 503 covers the respective electric wires 502 in a bundle at an end portion of the bus bar holder 321 of the bus bar unit 300. As illustrated in Fig. 19, the harness 503 covering the respective electric wires 502 extends to the second socket 403 of the controller unit 400.

The second connector 504 is joined to the respective electric wires 502 covered with the harness 503. The second connector 504 is inserted into the second socket 403 of the controller unit 400.

### (Configuration of Temperature Measurement Unit 600)

The temperature measurement unit 600 measures a temperature of the battery 100 under the control of the controller unit 400. The temperature measurement unit 600 illustrated in Figs. 1, 2, 4, 16, 19, and 20 includes temperature sensors 601 and electric wires 602. Hereinafter, constituent members included in the temperature measurement unit 600 will be described.

As illustrated in Fig. 4, the temperature sensor 601 is joined to any battery 100 of the six batteries 100 stacked between the first end block 211 and the intermediate block 212. As an example, this temperature sensor 601 is joined to the lid 102 of the battery 100 located at the fourth position from the first end block 211 toward the intermediate block 212 in Fig. 4. In addition, the temperature sensor 601 is joined to any one battery 100 of the six batteries 100 stacked between the intermediate block 212 and the second end block 213 as illustrated in Fig. 4. As an example, this temperature sensor 601 is joined to the lid 102 of the battery 100 located at the third position from the intermediate block 212 toward the second end block 213 in Fig. 4.

The electric wire 602 is a third communication line that is joined to the temperature sensor 601 and conducted to the control board 401. As illustrated in Figs. 4 and 20, the electric wire 602 is joined to each of the temperature sensors 601. The electric wire 602 is provided on the same surface, formed by the plurality of stacked batteries 100, with the electric wire 405 of the controller unit 400, and the same surface corresponds to an upper surface of the battery 100 to which the positive electrode terminal 103 and the negative electrode terminal 104 are attached. Each of the electric wires 602 extends in the stacking direction X from the temperature sensor 601 toward the intermediate block 212. Each of the electric wires 602 is orthogonal to the electric wire 405 of the controller unit 400 in a region from the temperature sensor 601 to the intermediate block 212, and each of the electric wires 602 is attached to the harness 406 of the controller unit 400. Each of the electric wires 602 extends to the first connector 404 of the controller unit 400 along the width direction Y of the intermediate block 212 and the battery 100. Each of the electric wires 602 is joined to the first connector 404.

### (Configuration of Junction Unit 700)

The junction unit 700 is an input/output unit to and from which power of the plurality of batteries 100 is input and output. The junction unit 700 electrically connects the plurality of batteries 100 and the electric device 1000 under the control of the controller unit 400. In general, the junction unit 700 is referred to as a junction box. The junction unit 700 illustrated in Figs. 1 to 10, 16, 19, and 20 includes the first relay bus bar 701, a second relay bus bar 702, a fuse 703, a third relay bus bar 704, a relay 705, a fourth relay bus bar 706, a current sensor 707, a positive-electrode-side connection terminal 708, and the negative-electrode-side connection terminal 709. In addition, the junction unit 700 includes an electric wire 711 and an electric wire 712. In addition, the junction unit 700 includes a case 721, insert nuts 722, and fastening bolts 723. Hereinafter, constituent members included in the junction unit 700 will be described.

As illustrated in Fig. 4, the first relay bus bar 701 is joined to the first end bus bar 301. As illustrated in Fig. 20, the first relay bus bar 701 includes a first joining portion 701a having a plate shape, a second joining portion 701b having a plate shape, and a coupling portion 701c having a curved shape. A first insertion hole 701d into which the fastening bolt 311 of the bus bar unit 300 is inserted is formed in the first joining portion 701a. A second insertion hole 701e into which the fastening bolt 723 is inserted is formed in the second joining portion 701b. A protrusion 701f having a plate shape and projecting toward the case 721 side is formed at an end portion of the second joining portion 701b. The first joining portion 701a is joined to the first end bus bar 301 via the fastening bolt 311. The second joining portion 701b is connected to the second relay bus bar 702 via the fastening bolt 723. The coupling portion 701c couples the first joining portion 701a and the second joining portion 701b. The coupling portion 701c projects toward the battery 100 side. The first relay bus bar 701 is made of, for example, copper.

As illustrated in Figs. 16 and 20, the second relay bus bar 702 brings the first relay bus bar 701 and the fuse 703 into conduction. The second relay bus bar 702 is formed by bending both ends of a long plate shape. A rectangular connection portion 702a is formed at an upper end of the second relay bus bar 702. The second joining portion 701b of the first relay bus bar 701 is connected to the connection portion 702a. An insertion hole 702b into which the fastening bolt 723 is inserted is formed in the connection portion 702a. The second relay bus bar 702 is made of, for example, copper.

The fuse 703 is illustrated in Figs. 16 and 20, and is blown to cut off the conduction between the electric device 1000 and the plurality of batteries 100 when a current exceeding a predetermined value is input for more than a predetermined time. The fuse 703 is connected between the second relay bus bar 702 and the third relay bus bar 704.

As illustrated in Figs. 16 and 20, the third relay bus bar 704 brings the fuse 703 and the relay 705 into conduction. The third relay bus bar 704 is formed in a plate shape. The third relay bus bar 704 is made of, for example, copper.

The relay 705 is illustrated in Figs. 16 and 20, and electrically connects or disconnects the electric device 1000 to or from the plurality of batteries 100 under the control of the controller unit 400. The relay 705 is connected between the third relay bus bar 704 and the fourth relay bus bar 706. That is, the relay 705 is indirectly connected to the plurality of batteries 100.

As illustrated in Figs. 16 and 20, the fourth relay bus bar 706 brings the relay 705 and the current sensor 707 into conduction. The fourth relay bus bar 706 is formed in a plate shape. The fourth relay bus bar 706 is made of, for example, copper.

The current sensor 707 is illustrated in Figs. 16 and 20, and measures a current value of power output from the plurality of batteries 100 under the control of the controller unit 400. The current sensor 707 is connected between the fourth relay bus bar 706 and the positive-electrode-side connection terminal 708. That is, the current sensor 707 is indirectly connected to the plurality of batteries 100.

As illustrated in Fig. 1, a power cable of the electric device 1000 is connected to the positive-electrode-side connection terminal 708. That is, the positive-electrode-side connection terminal 708 corresponds to an input/output terminal of power on a positive electrode side in the battery pack 1. As illustrated in Figs. 16 and 20, the positive-electrode-side connection terminal 708 is formed by bending both ends of a long plate shape. A rectangular connection portion 708a is formed at an upper end of the positive-electrode-side connection terminal 708. The power cable of the electric device 1000 is connected to the connection portion 708a. An insertion hole 708b into which the fastening bolt 723 is inserted is formed in the connection portion 708a. The positive-electrode-side connection terminal 708 is conducted to the power cable of the electric device 1000 via the fastening bolt 723. The positive-electrode-side connection terminal 708 is made of, for example, copper.

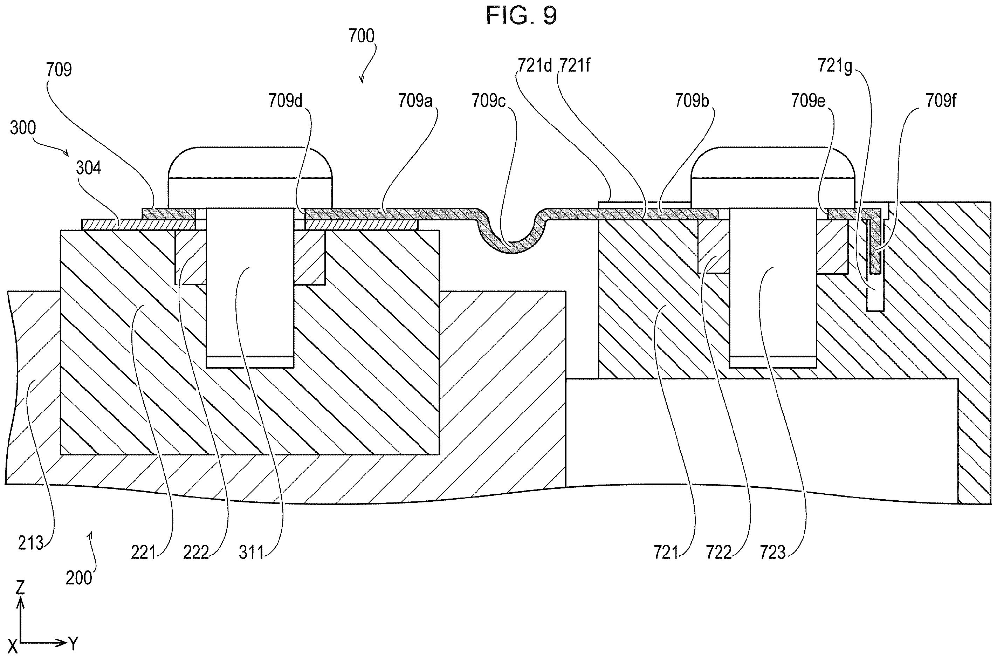

The negative-electrode-side connection terminal 709 is a bus bar. The negative-electrode-side connection terminal 709 electrically connects an external device (the power cable of the electric device 1000) and the plurality of batteries 100 electrically connected by the bus bar 302, the intermediate bus bar 303, and the like. As illustrated in Fig. 1, the power cable of the electric device 1000 is connected to the negative-electrode-side connection terminal 709. That is, the negative-electrode-side connection terminal 709 corresponds to an input/output terminal of power on a negative electrode side in the battery pack 1. As illustrated in Fig. 4, the negative-electrode-side connection terminal 709 is joined to the second end bus bar 304. As illustrated in Figs. 8, 9, and 20, an outer shape of the negative-electrode-side connection terminal 709 is the same as an outer shape of the first relay bus bar 701. As illustrated in Fig. 4, the negative-electrode-side connection terminal 709 extends from the battery 100 toward the case 721 and is formed into an elongated shape. That is, the negative-electrode-side connection terminal 709 extends in the elongated shape in the width direction Y (the intersecting direction) intersecting the stacking direction X of the battery 100. As illustrated in Fig. 9, the negative-electrode-side connection terminal 709 includes a first joining portion 709a having a plate shape, a second joining portion 709b having a plate shape, and a coupling portion 709c having a curved shape.

A first insertion hole 709d (a first insertion hole) into which the fastening bolt 311 is inserted is formed in the first joining portion 709a of the negative-electrode-side connection terminal 709. The first joining portion 709a is joined to the second end bus bar 304 via the fastening bolt 311 or the like inserted into the first insertion hole 709d. A second insertion hole 709e (a second insertion hole) into which the fastening bolt 723 is inserted is formed in the second joining portion 709b. The second joining portion 709b is connected to the power cable on the electric device 1000 side via the fastening bolt 723 or the like inserted into the second insertion hole 709e. The coupling portion 709c of the negative-electrode-side connection terminal 709 couples the first joining portion 709a and the second joining portion 709b. The coupling portion 709c projects toward the battery 100 side.

As illustrated in Fig. 8, a protrusion 709f having a rode shape and projecting toward the case 721 side is formed at an end portion of the second joining portion 709b. The protrusion 709f extends in the lateral direction of the negative-electrode-side connection terminal 709 on a distal end side in the longitudinal direction of the negative-electrode-side connection terminal 709, and projects toward the case 721 side. As an example, the protrusion 709f has a relatively longer length projecting toward the case 721 side (the lower side in the height direction Z) than a length in the lateral direction of the negative-electrode-side connection terminal 709 (the stacking direction X). The protrusion 709f is formed on a side edge 709b1 of the distal end of the negative-electrode-side connection terminal 709, which is most distant from the battery 100. As illustrated in Fig. 8, the protrusion 709f partially projects from the side edge 709b1 toward the case 721 side. The protrusion 709f is formed at the center of the side edge 709b1. The negative-electrode-side connection terminal 709 is made of, for example, copper.

The electric wire 711 is a fourth communication line that is joined to the relay 705 and conducted to the control board 401. The electric wire 711 is illustrated in Fig. 20, and transmits a signal from the control board 401 to the relay 705. One end of the electric wire 711 is connected to the first connector 404. The other end of the electric wire 711 is connected to the relay 705. The electric wire 711 is arranged to face the intermediate block 212 in a state of being bundled in the harness 406 between the controller unit 400 and the junction unit 700.

The electric wire 712 is a fifth communication line that is joined to the current sensor 707 and conducted to the control board 401. The electric wire 712 is illustrated in Fig. 20, and transmits a signal from the current sensor 707 to the control board 401. One end of the electric wire 712 is connected to the first connector 404. The other end of the electric wire 712 is connected to the current sensor 707. The electric wire 712 is arranged to face the intermediate block 212 in a state of being bundled in the harness 406 between the controller unit 400 and the junction unit 700.

As illustrated in Fig. 16, the case 721 accommodates the second relay bus bar 702, the fuse 703, the third relay bus bar 704, the relay 705, the fourth relay bus bar 706, the current sensor 707, and the positive-electrode-side connection terminal 708. The case 721 is a holding member that holds the negative-electrode-side connection terminal 709 and the like. The case 721 is made of an insulating material and has an insulating property. A terminal (a terminal of the power cable of the electric device 1000) is attached to the case 721 via the negative-electrode-side connection terminal 709. The terminal of the power cable is, for example, a bus bar including a metal plate.

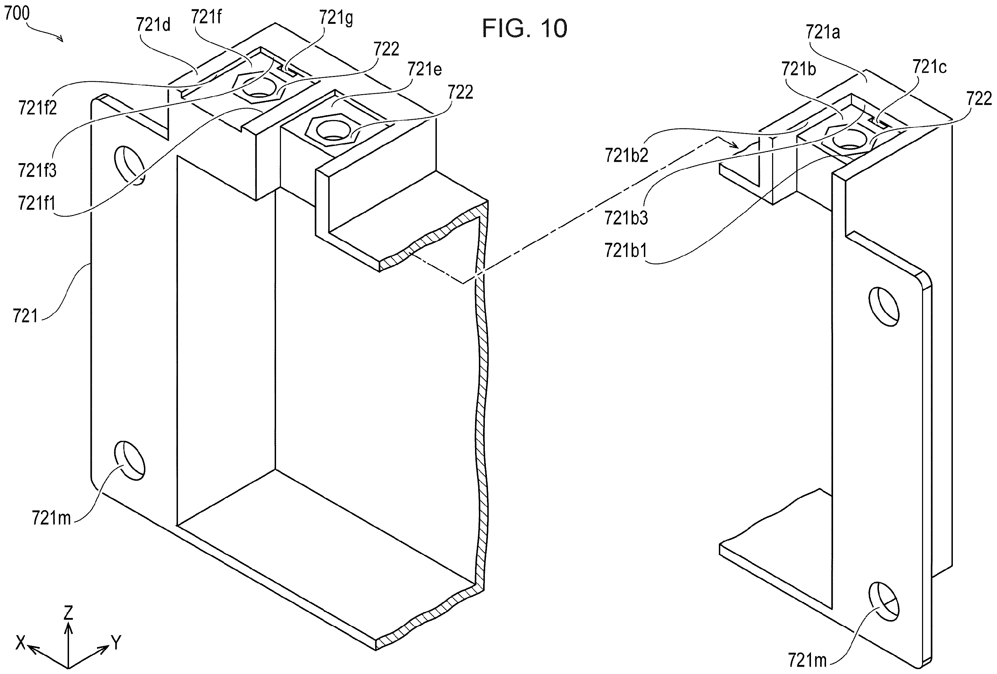

As illustrated in Fig. 4, the case 721 is provided along the stacking direction X of the plurality of batteries 100. As illustrated in Fig. 10, in the case 721, a first projecting portion 721a having a rectangular parallelepiped shape is formed on an upper surface adjacent to the first end block 211. The first projecting portion 721a projects from the upper surface of the case 721 along the height direction Z. A first accommodating portion 721b recessed in a rectangular shape is formed on an upper surface of the first projecting portion 721a. The first accommodating portion 721b is formed by cutting out a portion of the first projecting portion 721a facing the second side plate 232 to the endmost portion of the first projecting portion 721a. As illustrated in Fig. 10, the first accommodating portion 721b has a first inner side surface 721b1 and a second inner side surface 721b2 located on both sides in the stacking direction X. Similarly, as illustrated in Fig. 10, the first accommodating portion 721b has a third inner side surface 721b3 in a portion located outside the battery pack 1 in the width direction Y. On the other hand, the first accommodating portion 721b does not have an inner side surface at a portion located inside the battery pack 1. That is, the first accommodating portion 721b has the inner side surfaces on three sides of the first projecting portion 721a except for the portion facing the second side plate 232.

As illustrated in Figs. 4, 10, and 20, the second joining portion 701b of the first relay bus bar 701 is attached to the first accommodating portion 721b of the case 721. As illustrated in Fig. 10, an insertion portion 721c is formed in the first accommodating portion 721b. The insertion portion 721c is located in the vicinity of the third inner side surface 721b3 in the first accommodating portion 721b. The protrusion 701f of the first relay bus bar 701 is inserted into the insertion portion 721c. The insert nut 722 is embedded in a central portion of the first accommodating portion 721b.

As illustrated in Fig. 10, in the case 721, a second projecting portion 721d having a rectangular parallelepiped shape is formed on an upper surface adjacent to the second end block 213. The second projecting portion 721d projects from the upper surface of the case 721 along the height direction Z. On the upper surface of the second projecting portion 721d, a second accommodating portion 721e and a third accommodating portion 721f each of which is recessed in a rectangular shape are formed side by side along the stacking direction X.

As illustrated in Fig. 4, Figs. 10 and 20, the connection portion 708a of the positive-electrode-side connection terminal 708 is attached to the second accommodating portion 721e of the case 721. As illustrated in Fig. 10, the insert nut 722 is embedded in a central portion of the second accommodating portion 721e.

The third accommodating portion 721f is an accommodating portion that accommodates the negative-electrode-side connection terminal 709. As illustrated in Fig. 10, the third accommodating portion 721f is located on a side closer to the second end block 213 than the second accommodating portion 721e in the second projecting portion 721d. The third accommodating portion 721f is formed by cutting out a portion of the second projecting portion 721d facing the second side plate 232 to the endmost portion of the second projecting portion 721d. As illustrated in Fig. 10, the third accommodating portion 721f has a first inner side surface 721f1 and a second inner side surface 721f2 located on both sides in the stacking direction X. Similarly, the third accommodating portion 721f has a third inner side surface 721f3 in a portion located outside the battery pack 1 in the width direction Y. The first inner side surface 721f1, the second inner side surface 721f2, and the third inner side surface 721f3 face a side surface (thickness portion) of the second joining portion 709b of the negative-electrode-side connection terminal 709 with a gap. On the other hand, the third accommodating portion 721f does not have an inner side surface at a portion located inside the battery pack 1. That is, the third accommodating portion 721f has the inner side surfaces on three sides of the second projecting portion 721d except for the portion facing the second side plate 232.

As illustrated in Fig. 4, Figs. 10 and 11, the second joining portion 709b of the negative-electrode-side connection terminal 709 is attached to the third accommodating portion 721f of the case 721. That is, the negative-electrode-side connection terminal 709 is accommodated in the third accommodating portion 721f. As illustrated in Fig. 10, an insertion portion 721g is formed in the third accommodating portion 721f. The insertion portion 721g is an attachment portion, and is configured by a hole formed in the third accommodating portion 721f of the case 721. The attachment portion functions as a restricting portion that restricts displacement of the negative-electrode-side connection terminal 709 by restricting movement of the protrusion 709f. The insertion portion 721g is located in the vicinity of the third inner side surface 721f3 in the third accommodating portion 721f. The protrusion 709f of the negative-electrode-side connection terminal 709 is inserted and attached to the insertion portion 721g. A gap is formed between the insertion portion 721g and the protrusion 709f of the negative-electrode-side connection terminal 709. That is, the inside of the insertion portion 721g is sufficiently larger than an outer shape of the protrusion 709f of the negative-electrode-side connection terminal 709. Thus, the protrusion 709f of the negative-electrode-side connection terminal 709 is attached to the insertion portion 721g with the at least partially provided gap. The insert nut 722 is embedded in a central portion of the third accommodating portion 721f.

As illustrated in Fig. 16, the fastening bolts 241 are inserted into a plurality of insertion holes 721m formed in a side surface of the case 721 along the stacking direction X. As illustrated in Fig. 1, the case 721 is fixed to the second side plate 232 by the fastening bolts 241.

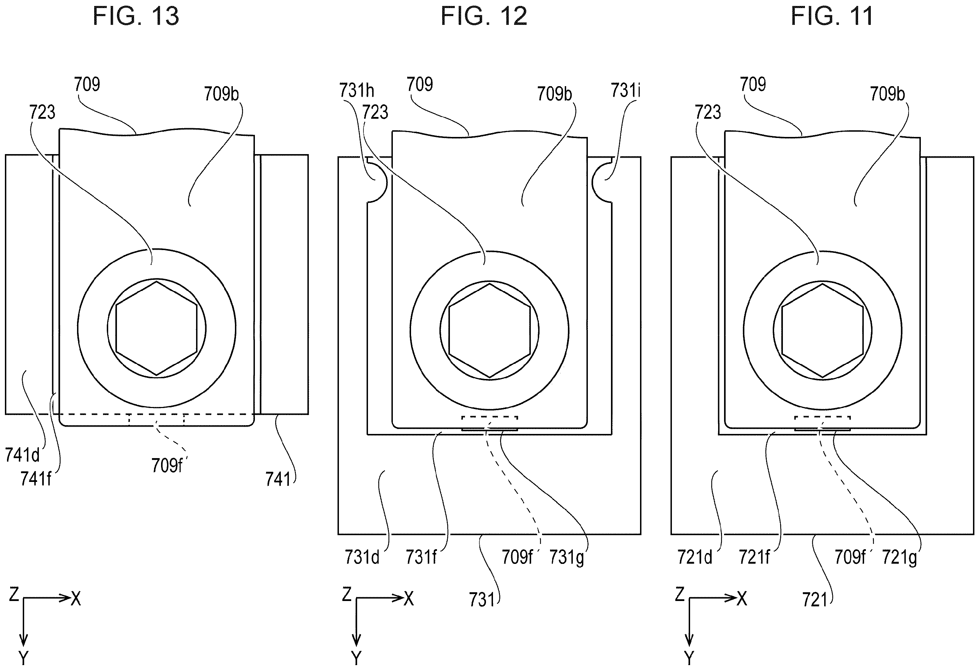

Fig. 12 illustrates a third accommodating portion 731f of a case 731 according to a first modification of the case 721 and the negative-electrode-side connection terminal 709. The second joining portion 709b of the negative-electrode-side connection terminal 709 is attached to the third accommodating portion 731f formed on a second projecting portion 731d of the case 731. That is, the negative-electrode-side connection terminal 709 is accommodated in the third accommodating portion 731f. A convex portion 731h is formed on one side surface of the third accommodating portion 731f of the case 731 along the width direction Y of the battery 100. The convex portion 731h projects in the stacking direction X of the battery 100 from the side surface of the third accommodating portion 731f toward the second joining portion 709b of the negative-electrode-side connection terminal 709. A convex portion 731i is formed on another side surface of the third accommodating portion 731f of the case 731 along the width direction Y of the battery 100. The convex portion 731i projects in the stacking direction X of the battery 100 from the side surface of the third accommodating portion 731f toward the second joining portion 709b of the negative-electrode-side connection terminal 709. The convex portion 731h and the convex portion 731i face each other along the stacking direction X of the battery 100.

As illustrated in Fig. 12, an insertion portion 731g is formed in the third accommodating portion 731f of the case 731. The insertion portion 731g is an attachment portion, and is configured by a hole formed in the third accommodating portion 731f of the case 731. The protrusion 709f of the negative-electrode-side connection terminal 709 is inserted and attached to the insertion portion 731g as indicated by a broken line in Fig. 12. A gap is formed between the insertion portion 731g and the protrusion 709f of the negative-electrode-side connection terminal 709. The insertion portion 731g is sufficiently separated from the convex portion 731h and the convex portion 731i in the width direction Y of the battery 100. The fastening bolt 723 is located between the insertion portion 731g, and the convex portions 731h and 731i.

In the third accommodating portion 731f of the case 731, the second joining portion 709b of the negative-electrode-side connection terminal 709 is positioned by the convex portion 731h, the convex portion 731i, and the insertion portion 731g as illustrated in Fig. 12.

Fig. 13 illustrates a third accommodating portion 741f of a case 741 according to a second modification of the case 721 and the negative-electrode-side connection terminal 709. The second joining portion 709b of the negative-electrode-side connection terminal 709 is attached to the third accommodating portion 741f formed on a second projecting portion 741d of the case 741. That is, the negative-electrode-side connection terminal 709 is accommodated in the third accommodating portion 741f. As indicated by a broken line in Fig. 13, the protrusion 709f of the negative-electrode-side connection terminal 709 is in contact with a side surface of the third accommodating portion 741f of the case 741 along the stacking direction X of the battery 100. That is, the third accommodating portion 741f of the case 741 positions the negative-electrode-side connection terminal 709 by bringing the protrusion 709f of the negative-electrode-side connection terminal 709 into contact with the side surface along the stacking direction X of the battery 100 without providing an insertion portion for insertion of the protrusion 709f of the negative-electrode-side connection terminal 709.

The insert nut 722 is another engagement member, and is embedded in each of the first accommodating portion 721b, the second accommodating portion 721e, and the third accommodating portion 721f. The fastening bolt 723, which is a second fixing member, is engaged with the insert nut 722 embedded in the third accommodating portion 721f with the negative-electrode-side connection terminal 709 interposed therebetween. Instead of the insert nut 722, another engagement portion corresponding to a screw groove for engagement of the fastening bolt 723 may be formed in the third accommodating portion 721f as a modification of the embodiment.

As illustrated in Figs. 16 and 20, the fastening bolt 723 is the second fixing member, and is configured to be capable of bringing the first relay bus bar 701 and the second relay bus bar 702 into conduction by fastening the first relay bus bar 701 and the second relay bus bar 702 together with the insert nut 722. In addition, the fastening bolt 723 is configured to be capable of bringing the positive-electrode-side connection terminal 708 and the power cable of the electric device 1000 into conduction by fastening the positive-electrode-side connection terminal 708 and the power cable of the electric device 1000 together with the insert nut 722. Similarly, the fastening bolt 723 is configured to be capable of bringing the negative-electrode-side connection terminal 709 and the power cable of the electric device 1000 into conduction by fastening the negative-electrode-side connection terminal 709 and the power cable of the electric device 1000 together with the insert nut 722.

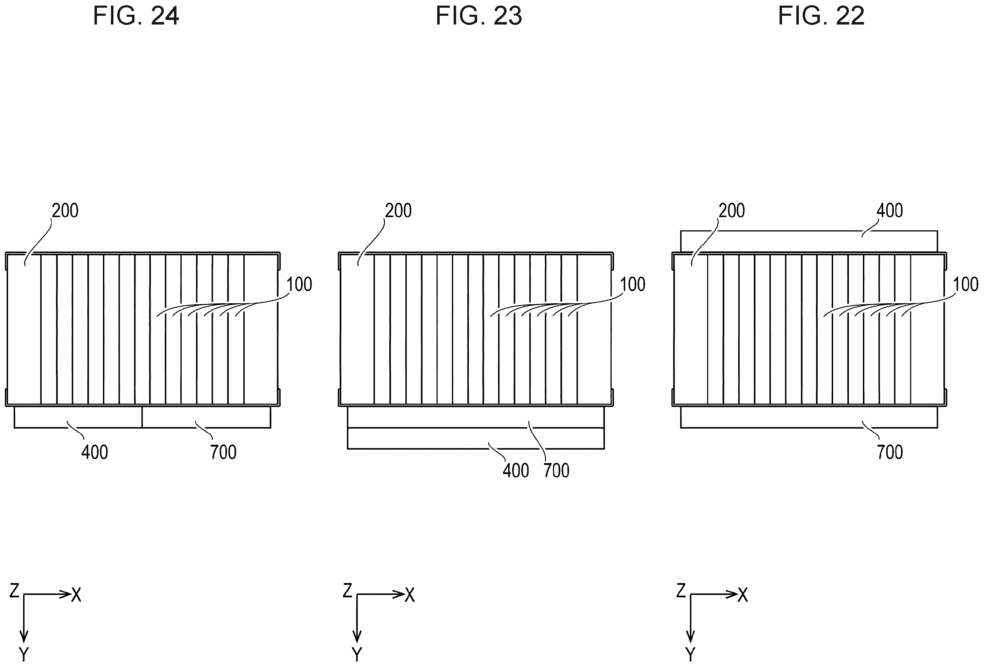

In the battery pack 1 illustrated in Fig. 22, the controller unit 400 and the junction unit 700 are provided along the stacking direction X of the plurality of stacked batteries 100. The controller unit 400 and the junction unit 700 face each other in the width direction Y of the battery 100 with the plurality of stacked batteries 100 interposed therebetween.

A battery pack 2 illustrated in Fig. 23 is a first modification related to the layout of the constituent members of the battery pack 1 illustrated in Fig. 22. That is, the battery pack 2 illustrated in Fig. 23 is configured by differently arranging the constituent members of the battery pack 1 illustrated in Fig. 22. In the battery pack 2 illustrated in Fig. 23, the controller unit 400 and the junction unit 700 are arranged to be adjacent to each other in the width direction Y of the battery 100.

A battery pack 3 illustrated in Fig. 24 is a second modification related to the layout of the constituent members of the battery pack 1 illustrated in Fig. 22. That is, the battery pack 3 illustrated in Fig. 24 is configured by differently arranging the constituent members of the battery pack 1 illustrated in Fig. 22. In the battery pack 3 illustrated in Fig. 24, the controller unit 400 and the junction unit 700 are arranged to be adjacent to each other along the stacking direction X of the battery 100.

### (Effects of Battery Pack 1 of Embodiment)

Effects of the battery pack 1 of the embodiment will be described.

For example, as illustrated in Fig. 15, a cell spacer 202 (an example of the spacer) includes a convex portion 202a projecting in a direction away from a battery 100. For example, a second side plate 232 (an example of the holding member) includes an accommodating portion 232d having a recessed depression to accommodate the convex portion 202a of the cell spacer 202. The above-described configuration of the cell spacer 202 is also included in a first intermediate spacer 203 and a second intermediate spacer 204. In addition, the above-described configuration of the second side plate 232 is also included in a first side plate 231. According to such a configuration, for example, even in a case where a battery pack 1 includes the cell spacer 202 provided with the convex portion 202a, interference between the convex portion 202a of the cell spacer 202 and the second side plate 232 can be prevented by forming the accommodating portion 232d in the second side plate 232 adjacent to the cell spacer 202. That is, for example, even in a case where the battery pack 1 includes the cell spacer 202 provided with the convex portion 202a, assemblability of the cell spacer 202 (an example of another constituent member) and the second side plate 232 (an example of one constituent member) can be maintained. In addition, according to such a configuration, the rigidity of the second side plate 232 can be improved by the accommodating portion 232d.

As illustrated in Fig. 15, the second side plate 232 includes a third rigid portion 232c (an example of the protrusion) projecting in a direction approaching the battery 100. The convex portion 202a of the cell spacer 202 and the third rigid portion 232c of the second side plate 232 are in contact with each other along a height direction Z intersecting a stacking direction X. According to such a configuration, for example, the second side plate 232 can be assembled to the cell spacer 202 such that the third rigid portion 232c of the second side plate 232 is disposed along the convex portion 202a of the cell spacer 202. That is, the third rigid portion 232c of the second side plate 232 can function as a guide. As a result, the cell spacer 202 and the second side plate 232 are positioned along the height direction Z. According to such a configuration, for example, the convex portion 202a of the cell spacer 202 and the third rigid portion 232c of the second side plate 232 can support each other.

As illustrated in Fig. 15, the accommodating portion 232d of the second side plate 232 is formed in a U shape. In Fig. 15, the accommodating portion 232d is illustrated in a state where the U shape is rotated by 180 degrees. According to such a configuration, the accommodating portion 232d of the second side plate 232 can be configured by a U-shaped outer shape having a sufficient ridge line so as to have sufficient rigidity.

The cell spacer 202 includes an attachment portion 202e. The attachment portion 202e is open toward the second side plate 232, and is configured by a recessed depression to accommodate the third rigid portion 232c of the second side plate 232. According to such a configuration, for example, the third rigid portion 232c of the second side plate 232 can be accommodated in the attachment portion 202e of the cell spacer 202. Therefore, the attachment portion 202e of the cell spacer 202 and the third rigid portion 232c of the second side plate 232 can support each other.

As illustrated in Fig. 15, a distal end 232c1 of the third rigid portion 232c of the second side plate 232 projects inward of the battery 100 from the outer edge 100c of the battery 100. In Fig. 15, the distal end 232c1 projects downward in the drawing. According to such a configuration, the third rigid portion 232c of the second side plate 232 can sufficiently project from the battery 100. Therefore, the second side plate 232 and the battery 100 can support each other with the cell spacer 202 interposed therebetween.

As illustrated in Fig. 15, the attachment portion 202e of the cell spacer 202 is formed in a U shape. According to such a configuration, the attachment portion 202e of the cell spacer 202 can be configured by a U-shaped outer shape having a sufficient ridge line so as to have sufficient rigidity.

### (Battery Pack of Another Embodiment)

A battery pack of the present invention is not limited to the configurations of the battery pack 1, the battery pack 2, and the battery pack 3 described in the embodiment, and can be appropriately configured on the basis of the contents described in the claims.

The battery 100 included in the battery pack 1 is not limited to a lithium ion battery. The battery 100 can be applied to, for example, a nickel hydrogen battery or a lead battery. The battery 100 is not limited to a secondary battery. The battery 100 can be applied to, for example, a primary battery. The current collector of the battery 100 may be either a wound type or a stacked type.

The embodiments have been described in detail or in a simplified manner in order to describe the present invention in an easily understandable manner, and do not need to have all the described configurations, or may have a configuration not illustrated in the drawings. In addition, a part of a configuration of an embodiment may be deleted, replaced with a configuration of another embodiment, or combined with a configuration of another embodiment.

### Reference Signs List

- 1: Battery pack
- 100: Battery
- 100a: Outer edge
- 202: Cell spacer (spacer)
- 202a: convex portion
- 202e: Attachment portion
- 203: First intermediate spacer (spacer)
- 204: Second intermediate spacer (spacer)
- 231: First side plate (holding member)
- 232: Second side plate (holding member)
- 232c: Third rigid portion (protrusion)
- 232c1: Distal end
- 232d: Accommodating portion
- X: stacking direction of battery 100

## Claims

1. A battery pack comprising:
a plurality of stacked batteries;
a spacer which is provided between the batteries adjacent to each other along a stacking direction of the battery and holds the adjacent batteries; and
a holding member which holds the plurality of batteries along the stacking direction; and
wherein the spacer includes a convex portion projecting from the battery toward the holding member, and
the holding member includes an accommodating portion having a recessed depression to accommodate the convex portion.

2. The battery pack according to claim 1, wherein
the holding member includes a protrusion projecting in a direction approaching the battery, and
the convex portion of the spacer and the convex portion of the holding member are in contact with each other along a direction intersecting the stacking direction.

3. The battery pack according to claim 1 or 2, wherein
the accommodating portion is formed in a U shape.

4. The battery pack according to claim 2, wherein
the spacer includes an attachment portion which is open toward the holding member and includes a recessed depression to which the protrusion of the holding member is attached.

5. The battery pack according to claim 2 or 4, wherein
a distal end of the protrusion of the holding member projects inward of the battery from an outer edge of the battery.

6. The battery pack according to claim 4, wherein
the attachment portion is formed in a U shape.
